(19) **Europäisches Patentamt**
**European Patent Office**
**Office européen des brevets**

(11) **EP 4 539 528 A1**

(12) **EUROPEAN PATENT APPLICATION**
published in accordance with Art. 153(4) EPC

(43) Date of publication:
**16.04.2025 Bulletin 2025/16**

(21) Application number: **22950600.1**

(22) Date of filing: **14.07.2022**

(51) International Patent Classification (IPC):
**H04W 24/02** (2009.01)

(52) Cooperative Patent Classification (CPC):
**H04W 24/02**

(86) International application number:
**PCT/CN2022/105593**

(87) International publication number:
**WO 2024/011474 (18.01.2024 Gazette 2024/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **GAO, Zhihe
  Hangzhou, Zhejiang 310027 (CN)**

• **CHEN, Xiaoming
  Hangzhou, Zhejiang 310027 (CN)**
• **HUANG, Chongwen
  Hangzhou, Zhejiang 310027 (CN)**
• **ZHANG, Zhaoyang
  Hangzhou, Zhejiang 310027 (CN)**
• **HUANGFU, Yourui
  Shenzhen, Guangdong 518129 (CN)**
• **WANG, Jian
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57) This application discloses a communication method and apparatus. The method includes: A first communication apparatus receives first indication information from a second communication apparatus. The first indication information indicates a data requirement of the second communication apparatus. The first communication apparatus determines first information based on the data requirement and data information of the first communication apparatus. The first information indicates the data information of the first communication apparatus. The first communication apparatus sends the first information to the second communication apparatus. The first communication apparatus receives second indication information from the second communication apparatus. The second indication information indicates transmission information of the first communication apparatus, and the transmission information is used by the first communication apparatus to transmit data corresponding to the data requirement. In the method, the first communication apparatus may transmit, based on the data requirement of the second communication apparatus and the transmission information indicated by the second communication apparatus, the data corresponding to the data requirement, so that efficiency of collecting data by the second communication apparatus can be improved.

FIG. 3

**Description**

**TECHNICAL FIELD**

This application relates to the field of wireless communication technologies, and in particular, to a communication method and apparatus.

**BACKGROUND**

In a future wireless communication system, when a centralized learning method is used to realize network intelligence, how to quickly collect data becomes an important research topic currently.

In a current centralized learning data collection method, a central node may be wirelessly connected to a terminal device through a base station, and then send data request information to the connected terminal device through the base station, to collect local data of the terminal device. After receiving the data request information, the terminal device may send the local data to the base station. However, in the data collection process, the terminal device does not report data based on an actual data requirement of the base station (or the central node) and a local data status of the terminal device. Therefore, after receiving the data of the terminal device, the base station needs to further select data that meets the data requirement, so that the data can be used for model training. Consequently, system overheads generated in the data collection process are high, and data collection efficiency is low.

Therefore, a communication method needs to be urgently provided to effectively improve the data collection efficiency.

**SUMMARY**

This application provides a communication method and apparatus, to effectively improve data collection efficiency.

According to a first aspect, a communication method is provided. The method may be performed by a first communication apparatus, or may be performed by a component (for example, a processor, a chip, or a chip system) of the first communication apparatus. This is not specifically limited in this application. The first communication apparatus may be a terminal device, or may be a data provider. The method may be implemented by using the following steps: A first communication apparatus receives first indication information from a second communication apparatus. The first indication information indicates a data requirement of the second communication apparatus. The first communication apparatus determines first information based on the data requirement and data information of the first communication apparatus. The first information indicates the data information of the first communication apparatus. The first communication apparatus sends the first information to the second communication apparatus. The first communication apparatus receives second indication information from the second communication apparatus. The second indication information indicates transmission information of the first communication apparatus, and the transmission information is used by the first communication apparatus to transmit data corresponding to the data requirement.

In the solution of this application, the first communication apparatus receives the first indication information from the second communication apparatus. Because the first indication information indicates the data requirement of the second communication apparatus, the first communication apparatus may learn the data requirement of the second communication apparatus. Then, the first communication apparatus determines the first information based on the data requirement and the data information of the first communication apparatus. The first information indicates the data information of the first communication apparatus, the first communication apparatus sends the first information to the second communication apparatus, and the second communication apparatus may determine the data information of the first communication apparatus. Further, the second communication apparatus may indicate the transmission information of the first communication apparatus to the first communication apparatus based on the data information of the first communication apparatus and the data requirement of the second communication apparatus, so that the first communication apparatus may send the data corresponding to the data requirement to the second communication apparatus based on the transmission information. Therefore, in this solution, the first communication apparatus may report the data information and the data corresponding to the data requirement based on the data requirement of the second communication apparatus, and then the second communication apparatus determines optimized transmission information for the first communication apparatus based on the data requirement and the data information of the first communication apparatus, so that the first communication apparatus sends the data corresponding to the data requirement to the second communication apparatus, thereby improving efficiency of collecting data by the second communication apparatus.

In a possible implementation, the first indication information is carried in a system message of the second communication apparatus.

In this implementation, when sending the system message to the first communication apparatus, the second communication apparatus carries the first indication information in the system message. It can be learned that the second communication apparatus indicates the data requirement of the second communication apparatus to the first communication apparatus in a system message broadcast phase in advance, thereby transmitting the data requirement of the second communication apparatus without a need to wait for the second communication apparatus to establish a communication connection to the first communication apparatus, so that a data collection interaction process is advanced, and then a data collection request and response may be made earlier. This helps improve data collection efficiency.

In a possible implementation, the first information is a preamble sequence.

In this manner, the first communication apparatus may indicate the data information of the first communication apparatus by using the preamble sequence. It can be learned that when sending the preamble sequence to the second communication apparatus, the first communication apparatus may notify the second communication apparatus of the data information of the first communication apparatus, so that a data collection interaction process is advanced, and then a data collection request and response may be made earlier. This helps improve data collection efficiency. In addition, no additional data requirement indication information is required by reusing the preamble sequence, thereby reducing indication overheads.

In a possible implementation, that the first communication apparatus determines first information based on the data requirement and data information of the first communication apparatus includes: The first communication apparatus determines the first information based on the data requirement, the data information, and a first correspondence. The first correspondence includes a one-to-one correspondence among the data requirement, the data information, and the first information.

In this implementation, the first communication apparatus may effectively determine the first information that indicates the data information of the first communication apparatus.

In a possible implementation, the transmission information of the first communication apparatus includes at least one or more of the following:

transmit power information, transmission beam information, precoding codebook information, and transmission resource information.

In this implementation, the second communication apparatus may flexibly determine the transmission information for the first communication apparatus, to optimize quality and efficiency of transmitting the data corresponding to the data requirement by the first communication apparatus.

In a possible implementation, the method further includes: The first communication apparatus sends the data corresponding to the data requirement to the second communication apparatus based on the transmission information of the first communication apparatus.

In this implementation, quality and efficiency of transmitting the data corresponding to the data requirement between the first communication apparatus and the second communication apparatus can be optimized.

According to a second aspect, a communication method is provided. The method may be performed by a second communication apparatus, or may be performed by a component (for example, a processor, a chip, or a chip system) of the second communication apparatus. This is not specifically limited in this application. The second communication apparatus may be a network device (for example, a base station), or may be a data collector. The method may be implemented by using the following steps: A second communication apparatus sends first indication information to a first communication apparatus. The first indication information indicates a data requirement of the second communication apparatus. The second communication apparatus receives first information from the first communication apparatus. The first information indicates data information of the first communication apparatus, and the data information is information corresponding to the data requirement. The second communication apparatus determines transmission information of the first communication apparatus based on the data information of the first communication apparatus. The second communication apparatus sends second indication information to the first communication apparatus. The second indication information indicates the transmission information.

In the solution of this application, the second communication apparatus sends the first indication information to the first communication apparatus, and the first indication information indicates the data requirement of the second communication apparatus, so that the first communication apparatus learns the data requirement of the second communication apparatus after receiving the first indication information. Further, the second communication apparatus further obtains the first information of the first communication apparatus, and the first information indicates the data information of the first communication apparatus. The second communication apparatus determines the transmission information of the first communication apparatus based on a local data requirement and the data information of the first communication apparatus, and finally sends, to the first communication apparatus, the second indication information that indicates the transmission information, so that the first communication apparatus sends the data corresponding to the data requirement based on the transmission information. Therefore, it can be learned that, in this solution, the second communication apparatus indicates the data requirement of the second communication apparatus to the first communication apparatus, determines proper transmission information for the first communication apparatus based on the data requirement and the data information of the first communication apparatus, and sends the proper transmission information to the first communication apparatus. Further, the first communication apparatus can be optimized to send the data corresponding to the data requirement, and efficiency of collecting data by the second communication apparatus can be improved.

In a possible implementation, the first indication information is carried in a system message of the second communication apparatus.

In this implementation, when sending the system message to the first communication apparatus, the second communication apparatus carries the first indication information in the system message. It can be learned that the second communication apparatus indicates the data requirement of the second communication apparatus to the first communication apparatus in a system message broadcast phase in advance, thereby interacting with the data requirement of the second communication apparatus without a need to wait for the first communication apparatus to establish a communication connection to the second communication apparatus, so that a data collection interaction process is advanced, and then a data collection request and response may be made earlier. This helps improve data collection efficiency.

In a possible implementation, the first information is a preamble sequence.

In this manner, the first communication apparatus may indicate the data information of the first communication apparatus by using the preamble sequence. It can be learned that when sending the preamble sequence to the second communication apparatus, the first communication apparatus may notify the second communication apparatus of the data information of the first communication apparatus, so that a data collection interaction process is advanced, and then a data collection request and response may be made earlier. This helps improve data collection efficiency. In addition, no additional data requirement indication information is required by reusing the preamble sequence, thereby reducing indication overheads.

In a possible implementation, the method further includes: The second communication apparatus determines the data information of the first communication apparatus based on the first information, the data requirement, and a first correspondence. The first correspondence includes a one-to-one correspondence among the first information, the data requirement, and the data information of the first communication apparatus.

In this implementation, the second communication apparatus may effectively and accurately learn the data information of the first communication apparatus based on the first information.

In a possible implementation, that the second communication apparatus determines transmission information of the first communication apparatus based on the data information of the first communication apparatus includes: The second communication apparatus determines a transmission weight of the first communication apparatus based on the data requirement of the second communication apparatus and the data information of the first communication apparatus, and/or the second communication apparatus determines channel state information of the first communication apparatus. The second communication apparatus determines transmit power information of the first communication apparatus and/or reception beam information of the second communication apparatus based on the transmission weight and/or the channel state information.

In this implementation, the second communication apparatus may effectively and accurately determine the transmit power information of the first communication apparatus and/or the reception beam information of the second communication apparatus flexibly based on the transmission weight of the first communication apparatus and/or the channel state information of the first communication apparatus. Therefore, it can be learned that when the first communication apparatus sends the data corresponding to the data requirement to the second communication apparatus based on the transmit power information, and the second communication apparatus receives the data based on the reception beam information, transmission of the data can be optimized, and efficiency of collecting the data by the second communication apparatus can be improved.

In a possible implementation, that the second communication apparatus determines channel state information of the first communication apparatus includes: The second communication apparatus obtains the channel state information of the first communication apparatus through measurement based on a reception signal of the first information.

In this implementation, the second communication apparatus may effectively and accurately obtain the channel state information of the first communication apparatus.

In a possible implementation, the transmission information of the first communication apparatus includes at least one or more of the following:

transmit power information, transmission beam information, precoding codebook information, and transmission resource information.

In this implementation, the second communication apparatus may flexibly determine the transmission information for the first communication apparatus, to optimize quality and efficiency of transmitting the data corresponding to the data requirement by the first communication apparatus.

In a possible implementation, the method further includes: The second communication apparatus receives the data corresponding to the data requirement from the second communication apparatus based on the transmission information of the first communication apparatus.

In this implementation, quality and efficiency of transmitting the data corresponding to the data requirement between the first communication apparatus and the second communication apparatus can be optimized.

According to a third aspect, a communication method is provided. The method may be performed by a first communication apparatus, or may be performed by a component (for example, a processor, a chip, or a chip system) of the first communication apparatus. This is not specifically limited in this application. The first communication apparatus may be a terminal device, or may be a data provider. The method may be implemented by using the following steps: A first communication apparatus receives first indication information from a second communication apparatus. The first indication information indicates a data requirement of the second communication apparatus. The first communication apparatus sends first information to the first communication apparatus. The first information indicates data information of the first communication apparatus, and the data information is information corresponding to the data requirement.

In the solution of this application, the first communication apparatus and the second communication apparatus may learn each other's data requirement and/or data information. After learning of the data requirement of the second communication apparatus, the first communication apparatus may report, to the second communication apparatus based on the data requirement, data that locally meets the data requirement, so that accuracy and efficiency of collecting data by the second communication apparatus can be improved. In addition, after learning the data information of the first communication apparatus, a data status of the first communication apparatus can be learned, so that the second communication apparatus can subsequently collect data of the first communication apparatus more efficiently.

According to a fourth aspect, a communication method is provided. The method may be performed by a second communication apparatus, or may be performed by a component (for example, a processor, a chip, or a chip system) of the second communication apparatus. This is not specifically limited in this application. The second communication apparatus may be a network device (for example, a base station), or may be a data collector. The method may be implemented by using the following steps: A second communication apparatus sends first indication information to a first communication apparatus. The first indication information indicates a data requirement of the second communication apparatus. The second communication apparatus receives first information from the first communication apparatus. The first information indicates data information of the first communication apparatus, and the data information is information corresponding to the data requirement.

**In** the solution of this application, the second communication apparatus sends the first indication information to the first communication apparatus, and the first indication information indicates the data requirement of the second communication apparatus, so that after receiving the first indication information, the first communication apparatus reports, to the second communication apparatus based on the data requirement, data that locally meets the data requirement, thereby improving accuracy and efficiency of collecting data by the second communication apparatus. In addition, the second communication apparatus may further learn the data information of the first communication apparatus based on the first information sent by the first communication apparatus, to learn a data status of the first communication apparatus. This helps the second communication apparatus subsequently collect data of the first communication apparatus more efficiently.

According to a fifth aspect, an embodiment of this application further provides a communication apparatus. The communication apparatus may be used in the first communication apparatus according to the first aspect. The communication apparatus may be a terminal device, or may be an apparatus (for example, a chip, a chip system, or a circuit) in a terminal device, or may be an apparatus that can be used together with a terminal device.

In a possible implementation, the communication apparatus may include modules or units that perform the corresponding methods/operations/steps/actions described in the first aspect. The module or unit may be implemented by a hardware circuit, software, or a combination of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver module and a processing module. The transceiver module is configured to receive first indication information from a second communication apparatus. The first indication information indicates a data requirement of the second communication apparatus. The processing module is configured to determine first information based on the data requirement and data information of the first communication apparatus. The first information indicates the data information of the first communication apparatus. The transceiver module is further configured to: send the first information to the second communication apparatus, and receive second indication information from the second communication apparatus. The second indication information indicates transmission information of the first communication apparatus, and the transmission information is used by the transceiver module to transmit data corresponding to the data requirement.

In a possible implementation, the first indication information is carried in a system message of the second communication apparatus.

In a possible implementation, the first information is a preamble sequence.

In a possible implementation, when determining the first information based on the data requirement and the data information of the first communication apparatus, the processing module is specifically configured to: determine the first information based on the data requirement, the data information, and a first correspondence. The first correspondence includes a one-to-one correspondence among the data requirement, the data information, and the first information.

In a possible implementation, the transmission information of the first communication apparatus includes at least one or more of the following:

transmit power information, transmission beam information, precoding codebook information, and transmission resource information.

In a possible implementation, the transceiver module is further configured to send the data corresponding to the data requirement to the second communication apparatus based on the transmission information of the first communication apparatus.

According to a sixth aspect, an embodiment of this application further provides a communication apparatus. The communication apparatus may be used in the second communication apparatus according to the second aspect. The communication apparatus may be a network device, an apparatus (for example, a chip, a chip system, or a circuit) in a network device, or an apparatus that can be used together with a network device. In a possible implementation, the communication apparatus may include modules or units that perform the corresponding methods/operations/steps/actions described in the second aspect. The module or unit may be implemented by a hardware circuit, software, or a combination of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver module and a processing module. The transceiver module is configured to: send first indication information to a first communication apparatus, where the first indication information indicates a data requirement of the second communication apparatus; and receive first information from the first communication apparatus, where the first information indicates data information of the first communication apparatus, and the data information is information corresponding to the data requirement. The processing module is configured to determine transmission information of the first communication apparatus based on the data information of the first communication apparatus. The transmission information is used by the first communication apparatus to transmit data corresponding to the data requirement. The transceiver module is further configured to send second indication information to the first communication apparatus. The second indication information indicates the transmission information.

In a possible implementation, the first indication information is carried in a system message of the second communication apparatus.

In a possible implementation, the first information is a preamble sequence.

In a possible implementation, the processing module is further configured to determine the data information of the first communication apparatus based on the first information, the data requirement, and a first correspondence. The first correspondence includes a one-to-one correspondence among the first information, the data requirement, and the data information of the first communication apparatus.

In a possible implementation, when determining the transmission information of the first communication apparatus based on the data information of the first communication apparatus, the processing module is specifically configured to: determine a transmission weight of the first communication apparatus based on the data requirement of the second communication apparatus and the data information of the first communication apparatus, and/or determine channel state information of the first communication apparatus; and determine transmit power information of the first communication apparatus and/or reception beam information of the second communication apparatus based on the transmission weight and/or the channel state information.

In a possible implementation, when determining the channel state information of the first communication apparatus, the processing module is specifically configured to obtain the channel state information of the first communication apparatus through measurement based on a reception signal of the first information.

In a possible implementation, the transmission information of the first communication apparatus includes at least one or more of the following:

transmit power information, transmission beam information, precoding codebook information, and transmission resource information.

In a possible implementation, the transceiver module is further configured to receive the data corresponding to the data requirement from the second communication apparatus based on the transmission information of the first communication apparatus.

According to a seventh aspect, an embodiment of this application further provides a communication apparatus. The communication apparatus may be used in the first communication apparatus according to the third aspect. The communication apparatus may be a terminal device, or may be an apparatus (for example, a chip, a chip system, or a circuit) in a terminal device, or may be an apparatus that can be used together with a terminal device.

In a possible implementation, the communication apparatus may include modules or units that perform the corresponding methods/operations/steps/actions described in the third aspect. The module or unit may be implemented by a hardware circuit, software, or a combination of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver module. The transceiver module is configured to: receive first indication information from a second communication apparatus, where the first indication information indicates a data requirement of the second communication apparatus; and send first information to the first communication apparatus, where the first information indicates data information of the first communication apparatus, and the data information is information corresponding to the data requirement. Optionally, the communication apparatus further includes a processing module, configured to invoke the transceiver module to perform a receiving and/or sending function, and/or process data and/or information of the communication apparatus.

According to an eighth aspect, an embodiment of this application further provides a communication apparatus. The communication apparatus may be used in the second communication apparatus according to the fourth aspect. The communication apparatus may be a network device, an apparatus (for example, a chip, a chip system, or a circuit) in a network device, or an apparatus that can be used together with a network device. **In** a possible implementation, the communication apparatus may include modules or units that perform the corresponding methods/operations/steps/actions described in the fourth aspect. The module or unit may be implemented by a hardware circuit, software, or a combination of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver module. The transceiver module is configured to: send first indication information to a first communication apparatus, where the first indication information indicates a data requirement of the second communication apparatus; and receive first information from the first communication apparatus, where the first information indicates data information of the first communication apparatus, and the data information is information corresponding to the data requirement. Optionally, the communication apparatus further includes a processing module, configured to invoke the transceiver module to perform a receiving and/or sending function, and/or process data and/or information of the communication apparatus.

According to a ninth aspect, an embodiment of this application provides a communication apparatus. The apparatus includes at least one processor and an interface circuit, the interface circuit is configured to provide an input and/or output of a program or instructions for the at least one processor, and the at least one processor is configured to execute the program or the instructions, so that the communication apparatus can implement the method provided in any one of the first aspect or the possible implementations thereof. Alternatively, the at least one processor is configured to execute the program or the instructions, so that the communication apparatus can implement the method provided in any one of the second aspect or the possible implementations thereof.

According to a tenth aspect, an embodiment of this application provides a communication apparatus. The apparatus includes at least one processor and an interface circuit, the interface circuit is configured to provide an input and/or output of a program or instructions for the at least one processor, and the at least one processor is configured to execute the program or the instructions, so that the communication apparatus can implement the method provided in any one of the third aspect or the possible implementations thereof. Alternatively, the at least one processor is configured to execute the program or the instructions, so that the communication apparatus can implement the method provided in any one of the fourth aspect or the possible implementations thereof.

According to an eleventh aspect, an embodiment of this application provides a computer storage medium. The storage medium stores a software program. When the software program is read and executed by one or more processors, the method provided in any one of the first aspect or the possible implementations thereof can be implemented, or the method provided in any one of the second aspect or the possible implementations thereof can be implemented.

According to a twelfth aspect, an embodiment of this application provides a computer storage medium. The storage medium stores a software program. When the software program is read and executed by one or more processors, the method provided in any one of the third aspect or the possible implementations thereof can be implemented, or the method provided in any one of the fourth aspect or the possible implementations thereof can be implemented.

According to a thirteenth aspect, an embodiment of this application provides a computer program product including instructions. When the instructions run on a computer, the computer is enabled to perform the method provided in any one of the first aspect or the possible implementations thereof; or the computer is enabled to perform the method provided in any one of the second aspect or the possible implementations thereof; or the computer is enabled to perform the method provided in any one of the third aspect or the possible implementations thereof; or the computer is enabled to perform the method provided in any one of the fourth aspect or the possible implementations thereof.

According to a fourteenth aspect, an embodiment of this application provides a chip system. The chip system includes a processor, configured to support a device in implementing a function in the first aspect, or configured to support a device in implementing a function in the second aspect, or configured to support a device in implementing a function in the third aspect, or configured to support a device in implementing a function in the fourth aspect.

In a possible design, the chip system further includes a memory. The memory is configured to store necessary program instructions and data. The chip system may include a chip, or may include a chip and another discrete component.

According to a fifteenth aspect, an embodiment of this application further provides a chip system. The chip system includes a processor and an interface. The interface is configured to obtain a program or instructions. The processor is configured to invoke the program or the instructions to implement or support a device in implementing the function in the first aspect, or the processor is configured to invoke the program or the instructions to implement or support a device in implementing the function in the second aspect, or the processor is configured to invoke the program or the instructions to implement or support a device in implementing the function in the third aspect, or the processor is configured to invoke the program or the instructions to implement or support the device in implementing the function in the fourth aspect.

In a possible design, the chip system further includes a memory. The memory is configured to store program instructions and data that are necessary for a terminal device. The chip system may include a chip, or may include a chip and another discrete component.

For technical effects that can be achieved in any one of the fifth aspect to the eighth aspect and the thirteenth aspect to the fifteenth aspect or the possible implementations of the fifth aspect to the eighth aspect and the thirteenth aspect to the fifteenth aspect, refer to descriptions of technical effects that can be achieved in any one of the possible implementations of the first aspect to the fourth aspect; for technical effects that can be achieved in any one of the ninth aspect and the eleventh aspect or the possible implementations of the ninth aspect and the eleventh aspect, refer to descriptions of technical effects that can be achieved in any one of the first aspect or the second aspect and the possible implementations thereof; and for technical effects that can be achieved in any one of the tenth aspect and the twelfth aspect or the possible implementations of the tenth aspect and the twelfth aspect, refer to the technical effects that can be achieved in any one of the third aspect or the fourth aspect and the possible implementations thereof. Details are not described herein again.

## BRIEF DESCRIPTION OF DRAWINGS

FIG. 1 is a diagram of a communication architecture in which a central node collects data through a wireless channel;
FIG. 2 is a diagram of a random access process;
FIG. 3 is a schematic flowchart of a communication method according to an embodiment of this application;
FIG. 4 is a diagram of a structure of a communication apparatus according to an embodiment of this application;
FIG. 5 is a diagram of a structure of a communication apparatus according to an embodiment of this application; and
FIG. 6 is a diagram of a structure of a chip apparatus according to an embodiment of this application.

## DESCRIPTION OF EMBODIMENTS

Embodiments of this application provide a communication method and apparatus. The method and the apparatus are based on a same or similar technical concept. Because the method and the apparatus have similar problem-resolving principles, mutual reference may be made to implementations of the apparatus and the method. Repeated parts are not described again.

In a future wireless communication system, when a centralized learning method is used to realize network intelligence, how to quickly collect data becomes an important research topic currently. An existing centralized learning method means that a central node collects data from an edge node, and then extracts a feature of the data from the central node for a specific task. For example, the collected data may be used to train a neural network by using a specific task as a target. Generally, collecting more data indicates that a trained model is more accurate. Therefore, in a wireless communication system, how to quickly collect data is an important research topic.

For ease of understanding the technical solutions in embodiments of this application, the following first briefly describes the centralized learning method.

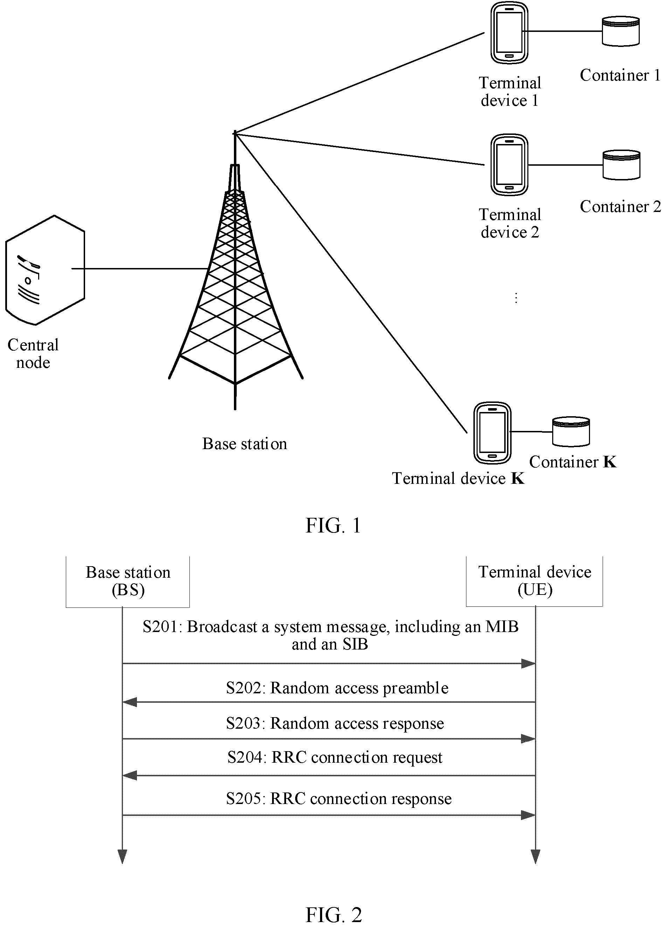

FIG. 1 is a diagram of a communication architecture in which a central node collects data through a wireless channel. FIG. 1 includes the central node, a network device (such as a base station shown in FIG. 2), and a plurality of dataset devices, for example, a terminal device 1, a terminal device 2, ..., and a terminal device K (K is a positive integer). Each terminal device corresponds to a container for storing information and/or data. The central node may be located inside the network device, or the central node may be independently located outside the network device, and the central node is connected to the network device. In addition, the network device may be wirelessly connected to a plurality of terminal devices. FIG. 2 is a diagram of a random access process. As shown in FIG. 2, the random access process includes: S201: A base station (or a cell) broadcasts, to a terminal device, a system message, including a master information block (master information block, MIB) and a system information block (system information block, SIB), and the terminal device receives the broadcast system message within a cell range. S202: The terminal device sends a random access preamble to the base station, and the base station receives the preamble. S203: The base station sends a random access response to the terminal device. S204: The terminal device sends a radio resource control (radio resource control, RRC) connection request to the base station (if the base station allows access of the terminal device), and the base station receives the RRC connection request. S205: The base station feeds back an RRC connection response to the terminal device. If the base station allows the RRC connection, the RRC connection is successfully established, and data communication can be performed between the base station and the terminal device.

When the base station collects data of the terminal device, the base station may send data request information to a plurality of connected terminal devices, to collect local data of the plurality of terminal devices. After receiving the data request information, the plurality of terminal devices may all send the local data to the base station. However, in the data collection process, the plurality of terminal devices do not report data based on an actual data requirement of the base station (or the central node) and a local data status of the terminal device. Therefore, after establishing connections to the plurality of terminal devices, the base station needs to select a terminal device that meets the data requirement, to send data for subsequent model training. Consequently, system overheads generated in the data collection process are high, and data collection efficiency is low. Therefore, this application provides a communication method. The method includes: A first communication apparatus receives first indication information from a second communication apparatus. The first indication information indicates a data requirement of the second communication apparatus. The first communication apparatus determines first information based on the data requirement and data information of the first communication apparatus. The first information indicates the data information of the first communication apparatus. The first communication apparatus sends the first information to the second communication apparatus. The first communication apparatus receives second indication information from the second communication apparatus. The second indication information indicates transmission information of the first communication apparatus, and the transmission information is used by the first communication apparatus to transmit data corresponding to the data requirement. **In** the method, the first communication apparatus may transmit, based on the data requirement of the second communication apparatus and the transmission information indicated by the second communication apparatus, the data corresponding to the data requirement, so that efficiency of collecting data by the second communication apparatus can be improved.

The solutions in this application may be used in wireless communication systems such as a 5th generation (5th generation, 5G), 6G, and satellite communication. The wireless communication systems include but are not limited to: 4th generation (4th generation, 4G) communication systems such as a narrow band-internet of things (narrow band-internet of things, NB-IoT) system and a long term evolution (long term evolution, LTE) system, 5th generation (5th generation, 5G) communication systems such as a new radio (new radio, NR) system, post-5G evolved communication systems such as a 6th generation (6th generation, 6G) communication system, and communication systems that support convergence of a plurality of wireless technologies, for example, a system that integrates an NTN system such as an uncrewed aerial vehicle, a satellite communication system, or high altitude platform station (high altitude platform station, HAPS) communication with terrestrial wireless communication such as 5G.

A communication system to which this application is applicable includes the first communication apparatus and the second communication apparatus. The first communication apparatus may serve as a sending end or receiving end, and the second communication apparatus may also serve as a receiving end or sending end. The first communication apparatus may be a network device or terminal device, and the second communication apparatus may be a network device or terminal device. This is not limited in this application.

The following describes the terminal device and the network device in this application.

The terminal device may be a wireless terminal device that can receive scheduling and indication information of a network device. The terminal device may be a device that provides voice and/or data connectivity for a user, a hand-held device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for a user). Currently, some examples of a terminal device are as follows: a mobile phone (mobile phone), a tablet computer, a notebook computer, a palmtop computer, a satellite terminal, a mobile internet device (mobile internet device, MID), a point of sale (point of sale, POS) device, a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a sweeper, a sound box, a set-top box, or the like.

A terminal device may be widely used in various scenarios, for example, device-to-device (device-to-device, D2D) communication, vehicle to everything (vehicle to everything, V2X) communication, machine-type communication (machine-type communication, MTC), an internet of things (internet of things, IoT), telemedicine, smart furniture, smart offices, smart wearables, and smart transportation.

In embodiments of this application, an apparatus configured to implement a function of a terminal device may be a terminal device, or may be an apparatus that can support the terminal device in implementing the function, for example, a chip system. The apparatus may be mounted in a terminal device or used together with a terminal device. In embodiments of this application, the chip system may include a chip, or may include a chip and another discrete component.

The network device may be a device in a wireless network. For example, the network device may be a device that is deployed in a radio access network and that provides a wireless communication function for the terminal device. For example, the network device may be a radio access network (radio access network, RAN) node that connects a terminal device to a wireless network, and may also be referred to as an access network device or a base station.

The network device includes but is not limited to an evolved NodeB (evolved NodeB, eNB), a radio network controller (radio network controller, RNC), a home NodeB (for example, a home evolved NodeB, or a home NodeB, HNB), a baseband unit (baseband unit, BBU), a radio relay node, a radio backhaul node, a transmission point (transmission point, TP), or the like. Alternatively, the network device may be a network device in a 5G mobile communication system, for example, a next generation NodeB (next generation NodeB, gNB), a transmission reception point (transmission reception point, TRP), or a TP in an NR system, or an antenna panel or a group of antenna panels (including a plurality of antenna panels) in a 5G mobile communication system. Alternatively, the network device may be a network node that constitutes a gNB or a transmission point, such as a BBU or a distributed unit (distributed unit, DU). Alternatively, the network device may be a terminal device that undertakes a base station function in V2X communication, machine to machine (machine to machine, M2M) communication, D2D communication, or the like.

A base station is an apparatus that is deployed in a radio access network to provide a wireless communication function for a terminal device. The base station may include a macro base station, a micro base station (also referred to as a small cell), a relay station, an access point, and the like in various forms. In systems using different radio access technologies, names of devices with the base station function may be different. In addition, the base station may alternatively be a satellite. For ease of description, in all embodiments of this application, the foregoing apparatuses that provide the wireless communication function for the terminal device are collectively referred to as network devices.

In embodiments of this application, an apparatus configured to implement a function of the network device may be a network device, or may be an apparatus that can support the network device in implementing the function, for example, a chip system. The apparatus may be mounted in a network device or used together with a network device. In embodiments of this application, the chip system may include a chip, or may include a chip and another discrete component.

In a possible implementation, a terminal device and a network device may communicate through an air interface (Uu) link, a communication link of a non-terrestrial network NTN, or the like between the terminal device and the network device. Terminal devices may communicate through sidelinks (sidelinks, SL) such as D2D. Specifically, a terminal device may be in a connected state or an active (active) state, or may be in a non-connected state (inactive) or an idle (idle) state, or may be in another state, for example, a state in which the terminal device is not attached to a network or downlink synchronization with a network is not performed.

Communication may be performed between a network device and a terminal device, between network devices, and between terminal devices by using a licensed spectrum, or may be performed by using an unlicensed spectrum, or may be performed by using both a licensed spectrum and an unlicensed spectrum. Communication may be performed by using a spectrum below 6 GHz (gigahertz, GHz), for example, by using a 700/900 MHz (megahertz, MHz) or a 2.1/2.6/3.5 GHz frequency band, or may be performed by using a spectrum above 6 GHz, for example, by using a millimeter wave or a terahertz (terahertz, THz) wave, or may be performed by using both a spectrum below 6 GHz and a spectrum above 6 GHz. Spectrum resources used for wireless communication are not specifically limited in embodiments of this application.

It should be noted that, in this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

The following describes the technical solutions in embodiments of this application with reference to the accompanying drawings in embodiments of this application.

An embodiment of this application provides a communication method. The method is applicable to but is not limited to the communication architecture shown in FIG. 1. A quantity of network devices and a quantity of terminal devices in the communication system shown in FIG. 1 are not specifically limited in this application. Different terminal devices may be connected to and communicate with a same network device or different network devices, or a plurality of network devices may be connected to and communicate with a same terminal device. Allocation of connections and communication between the network device and the terminal device is not specifically limited in this application. In addition, geographical locations of the terminal devices and the network devices in the communication system are not specifically limited in this application. In addition, at least one apparatus (for example, a central node, a controller, or a processor) configured to collect and analyze data may be further disposed and connected to a network device in the communication system, so as to collect information and/or data of the terminal devices through the network device, and perform subsequent model training by using the collected data.

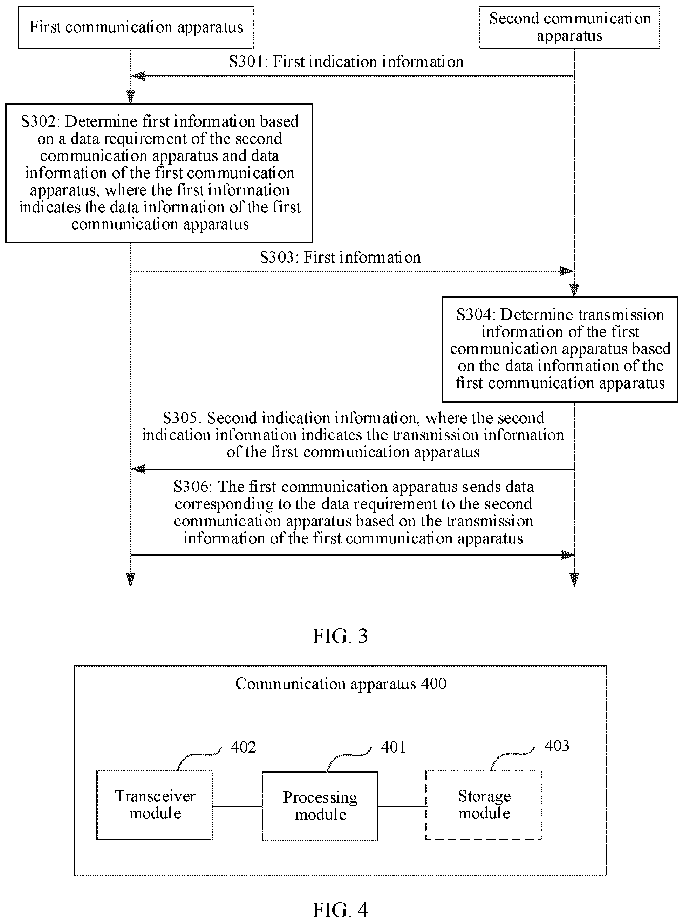

FIG. 3 is a schematic flowchart of a communication method according to an embodiment of this application. The method may be performed by a transceiver and/or processor in a first communication apparatus (which may alternatively be a second communication apparatus), or may be performed by a chip corresponding to the transceiver and/or processor. Alternatively, this embodiment may be implemented by a controller or control device connected to the first communication apparatus (which may alternatively be the second communication apparatus). The controller or control device is configured to manage at least one apparatus including the first communication apparatus (which may alternatively be the second communication apparatus). In addition, a specific form of a communication apparatus performing this embodiment is not specifically limited in this application. In addition, it should be noted that ordinal numbers such as "first" and "second" mentioned below are used to distinguish between a plurality of objects for ease of description, but are not used to limit a sequence, a time sequence, a priority, or an importance degree of the plurality of objects. With reference to FIG. 3, a specific process of the method is as follows.

S301: The second communication apparatus sends first indication information to the first communication apparatus, where the first indication information indicates a data requirement of the second communication apparatus.

Correspondingly, the first communication apparatus receives the first indication information, so that the first communication apparatus may determine the data requirement of the second communication apparatus based on the first indication information.

It should be noted that the first indication information may directly indicate the data requirement of the second communication apparatus. For example, the first indication information includes the data requirement of the second communication apparatus, or the first indication information is the data requirement of the second communication apparatus. Alternatively, the first indication information may indirectly indicate the data requirement of the second communication apparatus. For example, there is a one-to-one correspondence between the first indication information and the data requirement of the second communication apparatus, and both the first communication apparatus and the second communication apparatus know the correspondence. Therefore, after receiving the first indication information sent by the second communication apparatus, the first communication apparatus may determine the data requirement of the second communication apparatus based on the correspondence. Therefore, a manner in which the first indication information indicates the data requirement of the second communication apparatus is not specifically limited in this application.

Optionally, the second communication apparatus may be a network device, for example, a base station, or optionally may be a terminal device. The first communication apparatus may be a terminal device.

In an implementation, the first indication information is carried in a system message of the second communication apparatus.

In this implementation, the second communication apparatus indicates the data requirement of the second communication apparatus to the first communication apparatus in a system message broadcast phase in advance, thereby transmitting the data requirement of the second communication apparatus without a need to wait for the second communication apparatus to establish a communication connection to the first communication apparatus, so that an indication of the data requirement is advanced without a need to wait until the connection is established. In this way, an overall data collection interaction process is advanced, so that a data collection request and response may be made earlier. This helps improve data collection efficiency.

S302: The first communication apparatus determines first information based on the data requirement of the second communication apparatus and data information of the first communication apparatus, where the first information indicates the data information of the first communication apparatus.

In an implementation, the first information is a preamble sequence.

In this embodiment of this application, the first information may be a preamble sequence, or the first information may be information when RRC is established, or information after RRC is established (which may be implemented with reference to an existing manner). The first information is not specifically limited in this application.

When the first information is a preamble sequence, the first communication apparatus indicates the data information of the first communication apparatus by using the preamble sequence, and the first communication apparatus sends the preamble sequence to the second communication apparatus, the first communication apparatus may notify the second communication apparatus of the data information of the first communication apparatus (for example, there is a predefined correspondence between the preamble sequence and the data information, and the preamble sequence may indirectly indicate the data information), without a need to wait for the first communication apparatus establishes a communication connection to the second communication apparatus. In this way, a data collection interaction process is advanced, and then a data collection request and response may be made earlier. This helps improve data collection efficiency, reduce redundant connections, and reduce resource consumption. In addition, the preamble sequence is reused, so that no additional data requirement indication information is required, thereby reducing indication overheads.

In a possible implementation, that the first communication apparatus determines first information based on the data requirement of the second communication apparatus and data information of the first communication apparatus includes: The first communication apparatus determines the first information based on the data requirement, the data information, and a first correspondence. The first correspondence includes a one-to-one correspondence among the data requirement, the data information, and the first information.

This implementation may be understood as follows: The first information indirectly indicates the data information of the first communication apparatus, that is, there is a one-to-one correspondence between the first information and the data information of the first communication apparatus. Both the first communication apparatus and the second communication apparatus know the correspondence. Therefore, after receiving the first information sent by the first communication apparatus, the second communication apparatus may determine the data information of the first communication apparatus based on the correspondence.

In this embodiment of this application, the first information may alternatively directly indicate the data information of the first communication apparatus. For example, the first information includes the data information of the first communication apparatus, or the first information is the data information of the first communication apparatus. A manner of indicating the data information of the first communication apparatus by the first information is not specifically limited in this application.

S303: The first communication apparatus sends the first information to the second communication apparatus.

Correspondingly, the second communication apparatus receives the first information. The first information indicates the data information of the first communication apparatus, and the data information is information corresponding to the data requirement of the second communication apparatus. It may be understood that the data information may include a dataset state and/or a terminal device state, or may be data (or referred to as a dataset) corresponding to the data requirement.

In a possible implementation, the second communication apparatus determines the data information of the first communication apparatus based on the first information, the data requirement of the second communication apparatus, and a first correspondence. The first correspondence includes a one-to-one correspondence among the first information, the data requirement, and the data information of the first communication apparatus.

Optionally, the method may further include the following steps.

S304: The second communication apparatus determines transmission information of the first communication apparatus based on the data information of the first communication apparatus, where the transmission information is used by the first communication apparatus to transmit the data corresponding to the data requirement of the second communication apparatus.

The transmission information of the first communication apparatus may include but is not limited to any one or more of the following:

transmit power information, transmission beam information, precoding codebook information, and transmission resource information.

In a possible implementation, that the second communication apparatus determines transmission information of the first communication apparatus based on the data information of the first communication apparatus includes: The second communication apparatus determines a transmission weight of the first communication apparatus based on the data requirement of the second communication apparatus and the data information of the first communication apparatus; and/or the second communication apparatus determines channel state information of the first communication apparatus.

The second communication apparatus determines transmit power information of the first communication apparatus and/or reception beam information of the second communication apparatus based on the transmission weight and/or the channel state information. In this implementation, the second communication apparatus sends the transmit power information of the first communication apparatus to the first communication apparatus by using the following step S305. After receiving the transmit power information, the first communication apparatus may send, by using corresponding transmit power based on the transmit power information, data corresponding to a data requirement. Correspondingly, the second communication apparatus receives, by using a corresponding reception beam based on the reception beam information of the second communication apparatus, the data corresponding to the data requirement sent by the first communication apparatus.

In an implementation, that the second communication apparatus determines channel state information of the first communication apparatus includes: The second communication apparatus obtains the channel state information of the first communication apparatus through measurement based on a reception signal of the first information. Optionally, the second communication apparatus may alternatively obtain the channel state information in another manner, for example, by measuring an uplink reference signal. This is not limited in this application.

In an implementation, the second communication apparatus further determines a transmission beam of the first communication apparatus, and the transmission beam corresponds to a reception beam of the second communication apparatus. The second communication apparatus may further send indication information of the transmission beam to the first communication apparatus, so that the first communication apparatus can send, to the second communication apparatus by using the transmission beam, the data corresponding to the data requirement.

S305: The second communication apparatus sends second indication information to the first communication apparatus, where the second indication information indicates the transmission information of the first communication apparatus.

Correspondingly, the first communication apparatus receives the second indication information. It should be noted that the second indication information sent by the second communication apparatus to the first communication apparatus may alternatively be carried in another piece of transmission information. The second indication information may directly indicate the transmission information of the first communication apparatus. For example, the second indication information includes the transmission information of the first communication apparatus, or the second indication information is the transmission information of the first communication apparatus. The second indication information may alternatively indirectly indicate the transmission information of the first communication apparatus. For example, the second indication information indicates a sequence number or an identifier of the transmission information of the first communication apparatus, or the second indication information has a correspondence with the transmission information of the first communication apparatus, after receiving the second indication information sent by the second communication apparatus, the first communication apparatus may determine the corresponding transmission information based on the correspondence. Therefore, how to use the second indication information to indicate the transmission information of the first communication apparatus is not specifically limited in this application.

S306: The first communication apparatus sends the data corresponding to the data requirement to the second communication apparatus based on the transmission information of the first communication apparatus.

Correspondingly, the second communication apparatus receives the data corresponding to the data requirement from the second communication apparatus based on the transmission information of the first communication apparatus.

For example, the first communication apparatus sends the data corresponding to the data requirement to the second communication apparatus by using the transmit power (optionally, the determined transmission beam may be used) determined in the implementation of step S304. Correspondingly, the second communication apparatus determines a corresponding reception beam based on the reception beam information determined in the implementation of step S304, and receives the data corresponding to the data requirement from the first communication apparatus by using the reception beam.

It should be noted that the foregoing steps S301 to S306 are described by using only an example in which one first communication apparatus (for example, a terminal device) sends data to a second communication apparatus (for example, a base station). In practice, the second communication apparatus may collect, from a plurality of first communication apparatuses, the data corresponding to the data requirement of the second communication apparatus. Therefore, any first communication apparatus may implement data transmission with the second communication apparatus with reference to the first communication apparatus in steps S301 to 306. Details are not described in this application.

In addition, all data collected by the second communication apparatus may be sent to a data processing and/or analysis device (such as a central node, a processor, or a controller), to further train a machine learning model.

For example, a distributed dataset system is used as an example, and the system includes a central node located at a base station (equivalent to the second communication apparatus in this application) and $K$ terminal devices (equivalent to the first communication apparatus in this application), where $K$ is a positive integer, and the central node has a to-be-trained machine learning model. Datasets of all terminal devices form a set $\{V_1, V_2, ... V_K\}$, and a total quantity $\vartheta$

of dataset samples collected by the central node may meet the following formula 1:

$$\vartheta = \sum_k \left\lfloor \frac{d_k}{D_k} \right\rfloor + c \approx \sum_k \frac{d_k}{D_k} + c \qquad\qquad \text{Formula 1}$$

Herein, $k$ is a positive integer less than or equal to $K$, $d_k$ represents a data volume reported by a terminal device $k$, $D_k$ represents a size of each sample of the terminal device $k$, and $c$ represents a quantity of existing samples.

Based on a model training theory, a classification error $\varphi$ of a model is a function of the quantity $\vartheta$ of dataset samples. Generally, a function relationship of the classification error $\varphi$ and the quantity $\vartheta$ of dataset samples may meet the following formula 2:

$$\varphi \approx a\vartheta^b \qquad\qquad \text{Formula 2}$$

Herein, $a$ and $b > 0$, and represent adjustable parameters related to a classification task.

For an implementation of step S304, the following describes an algorithm for determining, by the base station (namely, the second communication apparatus), the transmit power of the terminal device and the reception beam of the base station based on the transmission weight of the terminal device (namely, the first communication apparatus).

Let a transmission time of a timeslot be $T$, and $T$ is greater than 0. A problem of how to minimize the foregoing classification error may be converted into a problem of how to optimize the following P1, that is, a value of the foregoing classification error $\varphi$ may be minimized by optimizing the following P1, and P1 meets the following formula 3:

$$\text{P1}: \ \min_{\mathbf{u}_k, P_k} a \left( \sum_{k=1}^{K} \frac{TR_k}{D_k} + c \right)^b \qquad\qquad \text{Formula 3}$$

$$\text{s.t. C1}: \ P_k \leq P_{\max,k}, \forall k$$

$$\text{C2}: \ \frac{TR_k}{D_k} \leq |V_k|, \forall k$$

Herein, $R_k$ represents a transmission rate of the terminal device k, $\mathbf{u}_k$ represents a reception beam of the terminal device $k$, C1 represents a transmit power limit, $P_k$ represents transmit power of the terminal device $k$, $P_{\max,k}$ represents maximum transmit power of the terminal device $k$, $\forall k$ represents that $k$ is any positive integer less than $K$, that is, any terminal device $k$ of the $K$ terminal devices, C2 represents a dataset limit, $V_k$ represents a set vector formed by datasets of the terminal device $k$, and s.t. represents a constraint condition.

Based on a characteristic of dataset distribution, P1 may be converted into P2, and P2 meets the following formula 4:

$$\text{P2}: \ \max_{\mathbf{u}_k, P_k} \sum_{k=1}^{K} \mu_k \frac{TR_k}{D_k} \qquad\qquad \text{Formula 4}$$

$$\text{s.t. C1}: \ P_k \leq P_{\max,k}, \forall k$$

$$\text{C2}: \ \frac{TR_k}{D_k} \leq |V_k|, \forall k$$

Herein, $\mu_k$ represents a transmission weight of the terminal device $k$.

The foregoing optimization problem may be solved by using an iterative alternating method. Specifically, the foregoing optimization P2 may be decomposed into two sub-problems. One is to optimize the transmit power by fixing the reception beam, and the other is to optimize the reception beam by fixing the transmit power. The two sub-problems are iterated alternately until convergence. For a problem of optimizing the transmit power by fixing the reception beam, that is, the problem P2-1, the problem P2-1 may meet the following formula 5:

$$\text{P2-1:} \ \max_{P_k} \sum_{k=1}^{K} \frac{\mu_k T}{D_k \ln 2} \ln\left(1 + \frac{\mathbf{u}_k^H \mathbf{h}_k \mathbf{h}_k^H \mathbf{u}_k P_k}{\mathbf{u}_k^H \sum_{i=1,i\neq k}^{K} P_i \|\mathbf{h}_i\|^2 \mathbf{u}_k + \sigma^2 \|\mathbf{u}_k\|^2}\right) \qquad \text{Formula 5}$$

$$\text{s.t. C1:} \ P_k \leq P_{\max,k}, \forall k$$

$$\text{C2:} \ \frac{TR_k}{D_k} \leq |V_k|, \forall k$$

Herein, $R_k$ represents the transmission rate of the terminal device $k$, $\mathbf{u}_k$ represents the reception beam of the terminal device $k$, C1 represents the transmit power limit, $P_k$ represents the transmit power of the terminal device $k$, $P_{\max,k}$ represents the maximum transmit power of the terminal device $k$, $\forall k$ represents that $k$ is any positive integer less than $K$, that is, any terminal device $k$ of the $K$ terminal devices, C2 represents the dataset limit, $V_k$ represents the set vector formed by the datasets of the terminal device $k$, s.t represents the constraint condition, $\mu_k$ represents the transmission weight of the terminal device $k$, $D_k$ represents a size of each sample of the terminal device k, In2 is a logarithm with e as a base, $\mathbf{u}_k^H$ is a conjugate transposition matrix of the $\mathbf{u}_k$ matrix, $h_k^H$ is a conjugate transposition matrix of the $h_k$ matrix, $h_k$ represents channel state information of the terminal device $k$, $\sigma^2$ is a noise variance, $P_i$ represents transmit power of a terminal device $i$, and $i$ is a positive integer less than or equal to $K$.

Because the foregoing problem P2-1 is non-convex, and cannot be directly solved, to solve the problem, intermediate variables $\alpha_k$ and $\beta_k$ may be introduced. In this case, P2-1 may be converted into P2-1', and P2-1' may meet the following formula 6:

$$\text{P2-1'} \ \max_{P_k} \sum_{k=1}^{K} \alpha_k - \beta_k \qquad \text{Formula 6}$$

$$\text{s.t. C1:} \ P_k \leq P_{\max,k}, \forall k$$

$$\text{C2:} \ \frac{TR_k}{D_k} \leq |V_k|, \forall k$$

$$\text{C3:} \ \mathbf{u}_k^H \sum_{i=1}^{K} P_i \|\mathbf{h}_i\|^2 \mathbf{u}_k + \sigma^2 \|\mathbf{u}_k\|^2 \geq e^{\frac{T}{D_k \ln 2} \alpha_k \mu_k}$$

$$\text{C4:} \ \mathbf{u}_k^H \sum_{i=1,i\neq k}^{K} P_i \|\mathbf{h}_i\|^2 \mathbf{u}_k + \sigma^2 \|\mathbf{u}_k\|^2 \leq e^{\frac{T}{D_k \ln 2} \beta_k \mu_k}$$

The foregoing problem P2-1' is a convex problem of an optimization variable $P_k$, and may be directly solved by an optimization tool, for example, a convex optimization toolbox CVX (Convex).

For a problem of optimizing the reception beam by fixing the transmit power (that is, the problem P2-2), it may be obtained, through solving, that a reception beam $\mathbf{u}_k$ of a base station corresponding to the terminal device k meets the following formula 7:

$$\mathbf{u}_k \propto \text{eig.vec}^{(\max)} \left[\sigma^2 + \sum_{i=1,i\neq k}^{K} P_i \|\mathbf{h}_i\|^2\right]^{-1} P_k \|\mathbf{h}_k\|^2 \qquad \text{Formula 7}$$

Herein, $\propto$ is a proportional symbol, *eig.vec*$^{(max)}$ represents solving a maximum eigenvector, $\sigma^2$ is the noise variance, $P_i$ represents the transmit power of the terminal device $i$, $i$ is a positive integer less than or equal to $K$, $h_i$ represents channel state information of the terminal device $i$, $h_k$ represents the channel state information of the terminal device $k$, and $P_k$ represents the transmit power of the terminal device $k$.

Because both the foregoing two sub-problems increase an objective function, convergence can be ensured through iterative optimization.

In an implementation, the foregoing algorithm may be designed to be implemented inside a specific device. The transmit power of the terminal device and the reception beam of the base station can be output provided that an input (for example, the channel state information and the transmission weight of the terminal device) is provided for the device. Specifically, reference may be made to the following.

**Algorithm:** a terminal transmit power and base station reception beam design for a distributed dataset system oriented to centralized learning
**Input:** the terminal device quantity $K$, the channel state information $h_k$, the noise variance $\sigma^2$, the maximum transmit

power $P_{\text{max},k}$, a bandwidth B, the sample size $D_k$, a wireless transmission weight $\mu_k$, and a timeslot length T.
**Output:** the transmit power $P_k$ and the reception beam $\mathbf{u}_k$.

1. Initialize $P_k$ and $\mathbf{u}_k$.

2. Use CVX to solve the optimization problem P2-1', to obtain the transmit power $P_k$.

3. Obtain the reception beam $\mathbf{u}_k \propto \text{eig.vec}^{(\text{max})}\left[\sigma^2 + \sum_{i=1,i\neq k}^{K} P_i \|\mathbf{h}_i\|^2\right]^{-1} P_k \|\mathbf{h}_k\|^2$.

4. Repeat steps 2 and 3 until convergence, to obtain $P_k$ and $\mathbf{u}_k$.

For the foregoing step S306, the following describes a manner in which the base station (equivalent to the second communication apparatus in this application) obtains sample data of the terminal device (equivalent to the first communication apparatus in this application).

For example, if all terminal devices send sample data at a same time and at a same frequency, a signal received by the base station may meet the following formula 8:

$$\mathbf{y} = \sum_{k=1}^{K} \mathbf{h}_k \sqrt{P_k} s_k + \mathbf{n} \qquad\qquad \text{Formula 8}$$

Herein, $s_k$ represents sample data of unit power sent by the terminal device $k$, $h_k$ represents a channel vector of the terminal device $k$, $P_k$ represents the transmit power of the terminal device $k$, and $\mathbf{n}$ represents a reception noise.

The base station may perform processing (for example, separation) by using the reception beam $\mathbf{u}_k$ corresponding to the terminal device $k$, to obtain the sample data sent by the terminal device k. The sample data $y_k$ of the terminal device $k$ may meet the following formula 9:

$$y_k = \mathbf{u}_k^{\text{H}} \sum_{k=1}^{K} \mathbf{h}_k \sqrt{P_k} s_k + \mathbf{u}_k^{\text{H}} \mathbf{n} \qquad\qquad \text{Formula 9}$$

In this case, the transmission rate $R_k$ of the terminal device $k$ meets the following formula 10:

$$R_k = \text{Blog}_2\left(1 + \frac{\left|\mathbf{u}_k^{\text{H}}\mathbf{h}_k\sqrt{P_k}\right|^2}{\sum_{i=1,i\neq k}^{K}\left|\mathbf{u}_k^{\text{H}}\mathbf{h}_i\sqrt{P_i}\right|^2 + \sigma^2\|\mathbf{u}_k\|^2}\right) \qquad\qquad \text{Formula 10}$$

Herein, B represents a channel bandwidth.

In conclusion, this application provides a communication method. The method includes: The first communication apparatus receives the first indication information from the second communication apparatus. The first indication information indicates the data requirement of the second communication apparatus. The first communication apparatus determines the first information based on the data requirement and the data information of the first communication apparatus. The first information indicates the data information of the first communication apparatus. The first communication apparatus sends the first information to the second communication apparatus. The first communication apparatus receives the second indication information from the second communication apparatus. The second indication information indicates the transmission information of the first communication apparatus, and the transmission information is used by the first communication apparatus to transmit the data corresponding to the data requirement. According to the method, the first communication apparatus may transmit the data corresponding to the data requirement based on the data requirement of the second communication apparatus and the transmission information indicated by the second communication apparatus, so that efficiency of collecting data of the first communication apparatus by the second communication apparatus can be improved.

The following further describes, in detail by using several specific implementations, a communication method provided in the solutions of this application.

**Implementation 1:**

For step S301, the implementation 1 provides a manner of indicating the data requirement of the second communication apparatus. In the implementation 1, for example, the first communication apparatus is UE 1, and the second communication apparatus is a base station 1. In this embodiment, known Table 1 is set, and both the UE 1 and the base station 1 know the Table 1. Specifically, as shown in Table 1, Table 1 includes a correspondence among dataset indication information, a task type of the base station 1, and data requirement information of the base station 1.

For example, when the dataset indication information is 1 (001), the UE 1 learns that the task type corresponding to the base station 1 is blocking identification, the data requirement information of the base station 1 is blocking state data, requirement data of the base station 1 is data from a cell coverage area, a dataset collection time is within five days, a quantity of the requirement data of the base station 1 is 100, the requirement data of the base station 1 is data that can be used to accurately determine a blocking manner, and a requirement cycle of the base station 1 is within 10 minutes (that is, a connection needs to be maintained within 10 minutes to complete transmission). When the dataset indication information used by the base station 1 is 1 (001), the UE 1 may learn that the base station 1 mainly collects the blocking state data collected by the UE 1, and expands a local dataset about blocking state identification, to train a model for identifying blocking, thereby improving accuracy of identifying blocking.

It should be understood that, the UE 1 can learn, with reference to Table 1, that the requirement data of the base station 1 is the data from the cell coverage area. Therefore, the UE 1 should report data in a cell coverage area of the base station 1 to the base station 1. How the UE 1 determines the data in the cell coverage area of the base station 1 from local data is not involved in this implementation. For example, the UE 1 has classified the local data based on different base stations in advance, or the UE 1 has a plurality of storage spaces and different storage spaces are used to store data in cell coverage areas of different base stations, or the UE 1 communicates only with the base station 1. This is not limited in this application.

In addition, the UE 1 may learn, with reference to Table 1, that the requirement data of the base station 1 is data for accurately determining a blocking manner. For example, local image data of the UE 1 cannot be used for accurately determining the blocking manner because photographing is not good. The base station 1 collects such image data from the UE 1 for training a machine learning model, which causes a poor training effect and further causes low accuracy of identifying the blocking manner based on the trained model. Therefore, the base station 1 needs the UE 1 to send, to the base station 1, data for accurately determining the blocking manner, to ensure validity and accuracy of the subsequent machine learning model training. How the UE 1 determines that reported local data is the data for accurately determining the blocking manner is not specifically limited in this application. For example, manual determining and selection may be performed.

When the dataset indication information used by the base station 1 is 2 (010), the task type corresponding to the base station 1 and the data requirement information corresponding to the base station 1 may be learned with reference to content in Table 1. Details are not described herein again. First, the base station 1 may determine corresponding dataset indication information (that is, the first indication information) based on the task type and the data requirement information by using Table 1. Then, optionally, when broadcasting the system message, the base station may carry the dataset indication information in the system message. The system message may be broadcast and sent to the UE 1 through the SIB. The UE 1 may obtain the system message, and then obtain the dataset indication information in the system message. Further, the UE 1 may determine the task type and the data requirement information of the base station 1 based on the dataset indication information by using Table 1. It should be noted that the base station 1 and the UE 1 may not necessarily obtain, in a form of a storage table, a correspondence similar to that shown in Table 1, and may be obtained by using a preset algorithm or in another manner. The form of the table is merely an example. This application is not limited thereto.

**Table 1**

| Dataset indication information | Task type | Data requirement information | Requirement data distribution 1 | Requirement data distribution 2 | Requirement data distribution 3 | Requirement data distribution 4 | Requirement cycle |
|---|---|---|---|---|---|---|---|
| 1 (001) | Blocking identification | Blocking state data | Cell coverage area | Within five days | 100 pieces | Accurately determining a blocking manner | Within 10 minutes |
| 2 (010) | Weather identification | Weather image | First region | Within three days | 80 pieces | Super definition | Within 30 minutes |
| ... | ... | ... | ... | ... | ... | ... | ... |

Table 1 is merely an example. In practice, Table 1 may further include more or less information, and is not limited to content shown in Table 1.

In the implementation 1, the dataset indication information may be flexibly set to indicate the data requirement information of the base station, and the base station may carry the dataset indication information in the system message, so that a terminal device that does not access the base station in a cell managed by the base station can learn the data requirement information of the base station in advance, thereby reducing redundant connections.

**Implementation 2:**

For step S302, the implementation 2 provides a manner of indicating the data information of the first communication apparatus. In the implementation 2, for example, the first communication apparatus is the UE 1, the second communication apparatus is the base station 1, and the first information is a preamble sequence.

According to the implementation 1, the UE 1 has determined the task type and the data requirement information of the base station 1. It should be noted that, only the implementation 1 is used as an example herein, and it is not limited to that the UE 1 determines the task type and the data requirement information of the base station 1 through the implementation 1. The UE 1 may determine the task type and the data requirement information in another manner. The implementation 2 and the implementation 1 may be decoupled. Further, the UE 1 determines, based on the data requirement information of the base station 1 (optionally, further based on the task type of the base station 1), whether a local dataset meets a data requirement of the base station 1. If the local dataset does not meet the requirement, the UE 1 does not perform any action. If the requirement is met, the UE 1 initiates random access. During random access, the UE 1 may determine a corresponding preamble sequence based on local data information (for example, including the dataset state and the terminal device state) and the data requirement information of the base station. For example, to determine the corresponding preamble sequence, a preamble sequence set may be determined by querying Table 2. Further, the UE 1 selects any preamble sequence from the preamble sequence set as a random access preamble sequence, and sends the random access preamble sequence to the base station 1. The preamble used by the UE 1 may include but is not limited to a ZC sequence, a Gaussian sequence, and the like; and a nonorthogonal sequence may be used. It should be noted that the base station 1 and the UE 1 may not necessarily obtain, in a form of a storage table, a correspondence similar to that shown in Table 2, and may be obtained by using a preset algorithm or in another manner. The form of the table is merely an example. This application is not limited thereto.

In the implementation 2 of this embodiment, known Table 2 is set, and both the UE 1 and the base station 1 know Table 2. As shown in Table 2, Table 2 includes a preamble sequence number, requirement data distribution 1, requirement data distribution 2, requirement data distribution 3, requirement data distribution 4, and a requirement cycle. For example, if a local dataset state of the UE 1 meets the data distribution 1, the data distribution 2, and the data distribution 4 of a dataset requirement, and the UE 1 meets the requirement cycle, it is determined that the preamble sequence set is ZC sequence numbers 9 to 16, and the UE 1 may randomly select a preamble from the preamble sequence numbers 9 to 16. When receiving the preamble sent by the UE 1, the base station 1 may also determine, by querying Table 2, the preamble sequence set in which Table 2 is located, and then may determine the local dataset state and the terminal device state of the UE 1 (that is, whether the UE 1 meets the requirement data distribution 1, the requirement data distribution 2, the requirement data distribution 3, the requirement data distribution 4, and the requirement cycle).

**Table 2**

| Preamble sequence number | Requirement data distribution 1 | Requirement data distribution 2 | Requirement data distribution 3 | Requirement data distribution 4 | Requirement cycle |
|---|---|---|---|---|---|
| ZC: 1-8 | True | False | True | False | True |
| ZC: 9-16 | True | True | False | True | True |
| ... | ... | ... | ... | ... | ... |

Table 2 is merely an example. In practice, Table 2 may further include more or less information, and is not limited to content shown in Table 2.

In the implementation 2, the terminal device may select the preamble sequence based on the local dataset state, the terminal device state, and the data requirement information of the base station, so that the base station can accurately determine a dataset state of the terminal device and the terminal device state based on the preamble sequence, to determine which terminal device is to be accessed (that is, determine which terminal device's data can meet the data requirement of data collection), and may further optimize data transmission information based on the dataset state of the terminal device and the terminal device state. In this way, data collection efficiency can be improved to a maximum extent.

**Implementation 3:**

For step S304, the implementation 3 provides a manner of determining the transmission weight of the first communication apparatus. In the implementation 3, for example, the first communication apparatus is the UE 1, and the second communication apparatus is the base station 1.

In the implementation 2, the base station 1 may receive a preamble sequence (for example, a preamble sequence of the UE 1) of each terminal device, and jointly obtain a dataset state and a terminal device state of each terminal device (for example, the UE 1) through parsing by using Table 2. It should be noted that, only the implementation 2 is used as an example herein, and it is not limited to that the base station 1 determines the data information (for example, including the dataset state and/or the terminal device state) of each terminal device (for example, the UE 1) through the implementation 2. The base station may determine the data information in another manner. The implementation 3 and the implementation 2 may be decoupled. The base station 1 may determine (allocate) a transmission weight for each terminal device based on the data information (for example, including the dataset state and/or the terminal device state) of each terminal device (for example, the UE 1). Further, the base station 1 may determine, based on the transmission weight of each terminal device, transmit power of each terminal device and a reception beam corresponding to the base station 1. The base station 1 feeds back the transmit power of each terminal device to each terminal device. Finally, each terminal device may send a dataset to the base station 1 by using the transmit power fed back by the base station 1. The base station 1 receives, by using a corresponding beam, the dataset sent by each terminal device. Optionally, the base station 1 may further determine a transmission beam of each terminal device corresponding to a reception beam of the base station 1, and indicate the transmission beam to each terminal device. Each terminal device may send a dataset to the base station 1 by using the transmission beam and the transmit power.

If the base station 1 receives preamble sequences of three terminal devices, for example, the UE 1 corresponds to a preamble sequence ZC_3, UE 2 corresponds to a preamble sequence ZC_11, and UE 3 corresponds to a preamble sequence ZC_15, the base station 1 may parse out a local dataset state and a terminal state of each terminal device based on preamble sequence numbers of the three terminal devices, as shown in Table 3. Further, the base station 1 determines (allocates) a transmission weight for each terminal device based on the data requirement information of the base station 1 and a local dataset state of each terminal device with reference to Table 3, for example, a transmission weight of the UE 1 is 0.3, a transmission weight of the UE 2 is 0.4, and a transmission weight of the UE 3 is 0.4. Finally, the base station 1 determines a wireless transmission parameter (equivalent to the transmission information of the first communication apparatus in the solution of this application) of each terminal device based on the transmission weight of each terminal device and channel state information of each terminal device. The wireless transmission parameter may include but is not limited to the transmit power information of the terminal device and the reception beam information of the base station. In addition, the base station 1 sends the transmit power information of each terminal device to each terminal device.

**Table 3**

| Preamble sequence number | Requirement data distribution 1 | Requirement data distribution 2 | Requirement data distribution 3 | Requirement data distribution 4 | Requirement cycle | Transmission weight |
|---|---|---|---|---|---|---|
| UE 1: ZC_3 | True | False | True | False | True | 0.3 |
| UE 2: ZC_11 | True | True | False | True | True | 0.4 |
| UE 3: ZC_15 | True | True | False | True | True | 0.4 |
| ... | ... | ... | ... | ... | ... | ... |

Table 3 is merely an example. In practice, Table 3 may further include more or less information, and is not limited to content shown in Table 3. It should be noted that the base station 1 may not necessarily obtain, in a form of a storage table, a correspondence similar to that shown in Table 3, and may be obtained by using a preset algorithm or in another manner. The form of the table is merely an example. This application is not limited thereto.

In the implementation 3, the base station may determine to obtain the local dataset state of the terminal device based on the preamble sequence of the terminal device, so as to allocate an appropriate transmission weight to the terminal device, and determine a transmission parameter (that is, transmission information) of the terminal device based on the transmission weight. In this way, the wireless transmission parameter can be optimized and a radio resource can be scheduled in advance, thereby improving data collection efficiency.

**Implementation 4:**

The implementation 4 mainly provides a specific manner of implementing the solutions of this application, and the following steps may be included.

Step 1: Determine that a distributed dataset system includes a base station configured with $N$ antennas, a central node, and $L$ terminal devices, where both N and L are positive integers, each terminal device has a specific quantity of pieces of sample data that can be used for machine learning task training, and a dataset including sample data of the L terminal devices may be defined as $\{V_1, V_2, \cdots V_L\}$.

Step 2: After a machine learning task arrives, the base station broadcasts a type of the learning task and data requirement information of the base station to all terminal devices.

Step 3: A terminal device that meets the learning task type and the requirement information may select a preamble sequence from a unique preamble sequence set (that is, the preamble sequence set determined in the implementation 2) of the terminal device based on information (a state and distribution) about a local dataset, and send the preamble sequence to the base station, to notify the base station of information (for example, a data state and distribution) about a dataset corresponding to the terminal device.

Step 4: The base station detects, based on a reception signal **Y** through joint device detection and channel estimation, that $K$ terminal devices of the L terminal devices meet the requirement, where $K$ is a positive integer greater than or equal to L, and estimates channel state information of each terminal device.

For example, the base station detects, based on the reception signal **Y** through joint device detection and channel estimation, that the $K$ terminal devices meet the data requirement of the base station, and estimates the channel state information of each terminal device, for example, channel state information $\boldsymbol{h}_k$ of the terminal device $k$, which may specifically include the following:

Let a preamble sequence matrix formed by preamble sequence sets of the $K$ terminal devices be represented as $\mathbf{A}=[\mathbf{A}_1, \mathbf{A}_2, ..., \mathbf{A}_K]$, and a state matrix formed by states of the $K$ terminal devices be represented as $\mathbf{X}=[\mathbf{X}_1, \mathbf{X}_2, ..., \mathbf{X}_K]$. A preamble sequence set corresponding to the terminal device $k$ is represented as $\mathbf{A}_k=[\mathbf{a}_{k,1}, \mathbf{a}_{k,2}, ..., \mathbf{a}_{k,N}]$, and the state matrix of the terminal device $k$ is represented as $\mathbf{X}_k=[s_{k,1}\boldsymbol{h}_k, s_{k,2}\boldsymbol{h}_k, ..., s_{k,N}\boldsymbol{h}_k]$, where N is a total quantity of preamble sequences included in the preamble sequence set of the terminal device $k$, $s_{k,j}$ is an activation indication flag, and j is a positive integer less than or equal to N. If the terminal device $k$ sends a jth preamble sequence of the terminal device, $s_{k,j}=1$; otherwise, $s_{k,j}=0$. Because the reception signal of the base station meets **Y=XA+V,** where **V** represents a reception noise and can be learned by the base station, the base station may obtain, according to the formula **Y=XA+V,** the channel state information $\boldsymbol{h}_k$ of the terminal device $k$ through parsing.

For example, the base station estimates the state matrix **X** of the terminal device based on the reception signal **Y** by using an approximate message passing (approximate message passing, AMP) method.

Further, the base station selects, based on the channel state matrix obtained through estimation, a device state value $l = \mathrm{argmax}\|s_{k,j}\boldsymbol{h}_k\|^2$ with a maximum norm of any terminal device $k$, where argmax() is a function used to obtain a maximum independent variable. If $\|s_{k,l}\boldsymbol{h}_k\|^2 \geq \gamma$, where

$$\gamma = \varepsilon \frac{\max_k \|\mathbf{h}_k\|^2}{\min_k \|\mathbf{h}_k\|^2}$$

, and $\varepsilon$ is an adjustable constant (for example, 0.01), let $s_{k,l} = 1$, $\mathbf{h}_k = \boldsymbol{X}_k$, and $\mu_k = \rho_l$, where $\mu_k$ is a wireless transmission weight of the terminal device $k$, $\rho_l$ is a wireless transmission weight corresponding to dataset distribution.

Step 5: The base station designs (determines) a reception beam $\mathbf{u}_k$ used by a corresponding base station for the terminal device $k$ based on the channel state information and the dataset distribution of the terminal device $k$, designs (determines) transmit power $P_k$ for the terminal device $k$, and broadcasts transmit power information to the terminal device $k$.

For example, a design method for the transmit power and the reception beam in step 5 may specifically include:

(a): Let the transmit power of the terminal device $k$ be $P_k = \tilde{P}_k$, where $\tilde{P}_k$ is transmit power obtained in a previous iteration, $P_{\mathrm{max},k}$ is the maximum transmit power of the terminal device $k$, and let $P_k$ be any value between 0 and $P_{\mathrm{max},k}$ during initial initialization; and let the reception beam of the base station be $\mathbf{u}_k = \tilde{\mathbf{u}}_k$, where $\tilde{\mathbf{u}}_k$ is a reception beam obtained in a previous iteration, and let $\mathbf{u}_k = \frac{1}{N}\mathbf{I}_N$ during initial initialization, where $\mathbf{I}_N$ represents an N-order unit matrix, **I** represents a unit matrix, and N is a total quantity of candidate beams (or may be a total quantity of antennas).

(b): Set a situation in which the reception beam $\mathbf{u}_k$ is known, and solve the following optimization problem by using CVX, to obtain that the transmit power $\tilde{P}_k$ meets the following formula:

$$\max_{P_k} \sum_{k=1}^{K} \alpha_k - \beta_k$$

$$\text{s.t. C1: } P_k \leq P_{\mathrm{max},k}, \forall k$$

$$\text{C2: } \frac{TR_k}{D_k} \leq |V_k|, \forall k$$

$$C3: \quad \mathbf{u}_k^H \sum_{i=1}^{K} P_i \|\mathbf{h}_i\|^2 \, \mathbf{u}_k + \sigma^2 \|\mathbf{u}_k\|^2 \geq e^{\frac{T}{D_k \ln 2} \alpha_k \mu_k}$$

$$C4: \quad \mathbf{u}_k^H \sum_{i=1, i \neq k}^{K} P_i \|\mathbf{h}_i\|^2 \, \mathbf{u}_k + \sigma^2 \|\mathbf{u}_k\|^2 \leq e^{\frac{T}{D_k \ln 2} \beta_k \mu_k}$$

The formula and the foregoing formula 6 belong to a same formula. For explanations of parameters in the formula, refer to explanations of corresponding parameters in the foregoing formula 6. Details are not described herein again. (c): Set a situation in which the transmit power $\tilde{P}_k$ is known, and the obtained reception beam $\tilde{u}_k$ meets the following formula:

$$\tilde{u}_k \propto \mathrm{eig.\,vec}^{(\max)} \left[ \sigma^2 + \sum_{i=1, i \neq k}^{K} \widetilde{P}_i \|h_i\|^2 \right]^{-1} \widetilde{P}_k \|h_k\|^2.$$

The formula and the foregoing formula 7 belong to a same formula. For explanations of parameters in the formula, refer to explanations of corresponding parameters in the foregoing formula 7. Details are not described herein again.

The foregoing steps (a) to (c) are iterated until the transmit power $P_k$ and the reception beam $u_k$ each converge to a specific value, so that the transmit power and the reception beam may be used as the transmit power of the terminal device *k* and the reception beam of the corresponding base station.

Step 6: The terminal device that meets the learning task type requirement may send the sample data to the base station by using the transmit power designed in step 5.

Step 7: The base station separates a signal of the terminal device *k* from the reception signal by using the corresponding reception beam $\mathbf{u}_k$ designed in step 5, and obtains the sample data of the terminal device *k* through parsing, so as to train the machine learning model.

In the implementation 4, it can be learned that in the solution of this embodiment of this application, the terminal device may report, based on the data requirement of the base station, the dataset that meets the data requirement of the base station, so that a useless terminal device can be prevented from reporting a dataset to the base station, and a side of the base station can determine whether the dataset collected from the terminal device meets the data requirement, thereby improving efficiency and accuracy of collecting the dataset of the terminal device by the base station. In addition, the base station may further determine a corresponding optimized transmission parameter (transmission information) for the terminal device based on the local data requirement of the base station and the dataset information of the terminal device, so that transmission efficiency of reporting a dataset by the terminal device can be improved.

A communication apparatus provided in embodiments of this application is described below.

Based on a same technical concept, an embodiment of this application provides a communication apparatus. The communication apparatus may be used in the first communication apparatus in the method in this application, for example, a terminal device. The communication apparatus includes modules or units that perform the corresponding methods/operations/steps/actions described in the first communication apparatus in the foregoing embodiment. The module or unit may be implemented by a hardware circuit, software, or a combination of a hardware circuit and software. The communication apparatus has a structure shown in FIG. 4.

As shown in FIG. 4, the communication apparatus 400 may include a processing module 401, and the processing module 401 is equivalent to a processing unit.

Optionally, the communication apparatus 400 further includes a transceiver module 402, and the transceiver module 402 may implement a corresponding communication function. Specifically, the transceiver module 402 may specifically include a receiving module and/or a sending module. The receiving module may be configured to receive information, data, and/or the like, and the sending module may be configured to send information and/or data. The transceiver unit may also be referred to as a communication interface or a transceiver unit.

Optionally, the communication apparatus 400 may further include a storage module 403. The storage module 403 is equivalent to a storage unit, and may be configured to store instructions and/or data. The processing module 401 may read the instructions and/or the data in the storage module, so that the communication apparatus implements the foregoing method embodiments.

The communication apparatus 400 may be configured to perform the action performed by the first communication apparatus in the foregoing method embodiments. The communication apparatus 400 may be the first communication apparatus or a component that may be disposed in the first communication apparatus. The transceiver module 402 is configured to perform sending-related operations on a side of the first communication apparatus in the foregoing method embodiments. The processing module 401 is configured to perform processing-related operations on the side of the first communication apparatus in the foregoing method embodiments.

Optionally, the transceiver module 402 may include a sending module and a receiving module. The sending module is configured to perform a sending operation in the foregoing method embodiments. The receiving module is configured to perform a receiving operation in the foregoing method embodiments.

It should be noted that the communication apparatus 400 may include the sending module, but does not include the receiving module. Alternatively, the communication apparatus 400 may include the receiving module, but does not include the sending module. This may be specifically determined based on whether the foregoing solution performed by the communication apparatus 400 includes a sending action and a receiving action.

For example, the communication apparatus 400 is configured to perform the action performed by the first communication apparatus in the foregoing embodiment shown in FIG. 3.

For example, the transceiver module 402 is configured to receive first indication information from a second communication apparatus. The first indication information indicates a data requirement of the second communication apparatus. The processing module 401 is configured to determine first information based on the data requirement and data information of the first communication apparatus. The first information indicates the data information of the first communication apparatus. The transceiver module 402 is further configured to: send the first information to the second communication apparatus, and receive second indication information from the second communication apparatus. The second indication information indicates transmission information of the first communication apparatus, and the transmission information is used by the first communication apparatus to transmit data corresponding to the data requirement.

It should be understood that a specific process in which the modules perform the foregoing corresponding processes is described in detail in the foregoing method embodiment. For brevity, details are not described herein again.

The processing module 401 in the foregoing embodiment may be implemented by at least one processor or a processor-related circuit. The transceiver module 402 may be implemented by a transceiver or a transceiver-related circuit. The storage unit may be implemented by at least one memory.

Based on a same technical concept, an embodiment of this application provides a communication apparatus. The communication apparatus may be used in the second communication apparatus in the method in this application, for example, a network device. The communication apparatus includes modules or units that perform the corresponding methods/operations/steps/actions described in the second communication apparatus in the foregoing embodiment. The module or unit may be implemented by a hardware circuit, software, or a combination of a hardware circuit and software. The communication apparatus may also have a structure shown in FIG. 4.

As shown in FIG. 4, the communication apparatus 400 may include a processing module 401, and the processing module 401 is equivalent to a processing unit.

Optionally, the communication apparatus 400 further includes a transceiver module 402, and the transceiver module 402 may implement a corresponding communication function. Specifically, the transceiver module 402 may specifically include a receiving module and/or a sending module. The receiving module may be configured to receive information, data, and/or the like, and the sending module may be configured to send information and/or data. The transceiver unit may also be referred to as a communication interface or a transceiver unit.

Optionally, the communication apparatus 400 may further include a storage module 403. The storage module 403 is equivalent to a storage unit, and may be configured to store instructions and/or data. The processing module 401 may read the instructions and/or the data in the storage module, so that the communication apparatus implements the foregoing method embodiments.

The communication apparatus 400 may be configured to perform the action performed by the second communication apparatus in the foregoing method embodiments. The communication apparatus 400 may be the second communication apparatus or a component that may be disposed in the second communication apparatus. The transceiver module 402 is configured to perform receiving-related operations on a side of the second communication apparatus in the foregoing method embodiments. The processing module 401 is configured to perform processing-related operations on side of the second communication apparatus in the foregoing method embodiments. Optionally, the transceiver module 402 may include a sending module and a receiving module. The sending module is configured to perform a sending operation in the foregoing method embodiments. The receiving module is configured to perform a receiving operation in the foregoing method embodiments.

It should be noted that the communication apparatus 400 may include the sending module, but does not include the receiving module. Alternatively, the communication apparatus 400 may include the receiving module, but does not include the sending module. This may be specifically determined based on whether the foregoing solution performed by the communication apparatus 400 includes a sending action and a receiving action.

For example, the communication apparatus 400 is configured to perform the action performed by the second communication apparatus in the foregoing embodiment shown in FIG. 3.

For example, the transceiver module 402 is configured to: send first indication information to a first communication apparatus, where the first indication information indicates a data requirement of the second communication apparatus; and receive first information from the first communication apparatus, where the first information indicates data information of the first communication apparatus, and the data information is information corresponding to the data requirement. The processing module 401 is configured to determine transmission information of the first communication apparatus based on the data information of the first communication apparatus. The transmission information is used by the first communication apparatus to transmit data corresponding to the data requirement. The transceiver module 402 is further configured to send second indication information to the first communication apparatus. The second indication information indicates the transmission information.

It should be understood that a specific process in which the modules perform the foregoing corresponding processes is described in detail in the foregoing method embodiment. For brevity, details are not described herein again.

The processing module 401 in the foregoing embodiment may be implemented by at least one processor or a processor-related circuit. The transceiver module 402 may be implemented by a transceiver or a transceiver-related circuit. The storage unit may be implemented by at least one memory.

This application further provides a communication apparatus. The communication apparatus may be a first communication apparatus, a processor in a first communication apparatus, or a chip. The communication apparatus may be configured to perform the operations performed by the first communication apparatus in the foregoing method embodiment. Alternatively, the communication apparatus may be a second communication apparatus, a processor in a second communication apparatus, or a chip. The communication apparatus may be configured to perform the operations performed by the second communication apparatus in the foregoing method embodiment.

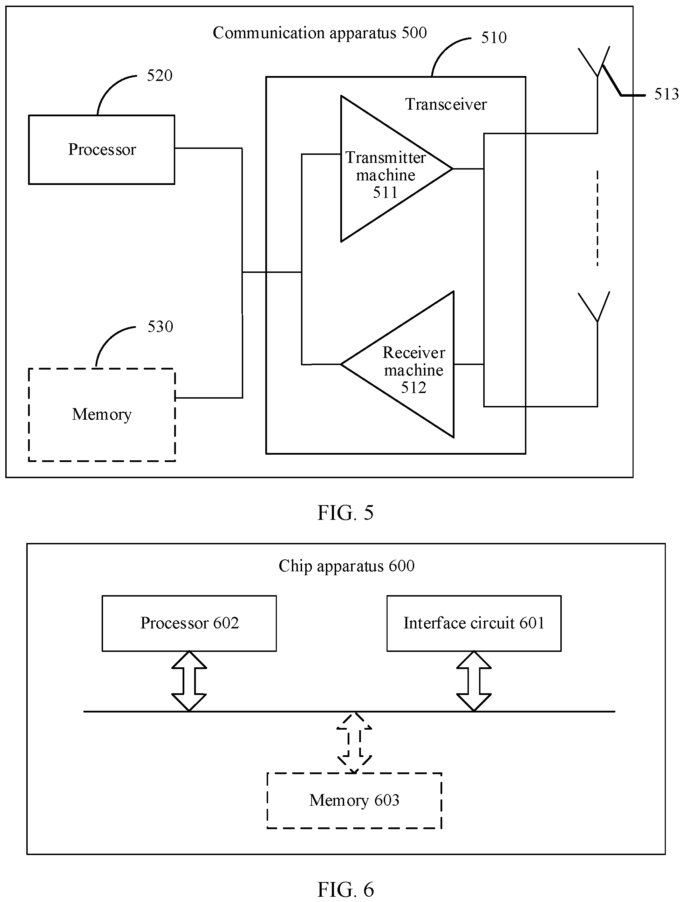

FIG. 5 is a simplified diagram of a structure of a communication apparatus. As shown in FIG. 5, the communication apparatus 500 includes a processor 520. Optionally, the communication apparatus further includes a transceiver 510 and a memory 530.

The processor 520 may also be referred to as a processing unit, a processing board, a processing module, a processing apparatus, or the like.

The transceiver 510 may also be referred to as a transceiver module, a transceiver unit, a transceiver machine, a transceiver circuit, a transceiver apparatus, a communication interface, or the like. Optionally, a component that is in the transceiver 510 and that is configured to implement a sending function may be considered as a sending unit or a sending module, and a component that is in the transceiver 510 and that is configured to implement a receiving function may be considered as a receiving unit or a receiving module. To be specific, the transceiver 510 may include a transmitter machine 511, a receiver machine 512, a radio frequency circuit (not shown in the figure), an antenna 513, and an input/output apparatus (not shown in the FIG. 5). The transmitter machine 511 sometimes may also be referred to as a transmitter, a transmitting module, a transmitting unit, a transmitting circuit, or the like. The receiver machine 512 sometimes may also be referred to as a receiver, a receiving module, a receiving unit, a receiving circuit, or the like. The radio frequency circuit is mainly configured to: perform conversion between a baseband signal and a radio frequency signal, and process the radio frequency signal. The antenna 513 is mainly configured to receive and send radio frequency signals in a form of an electromagnetic wave. The input/output apparatus, for example, a touchscreen, a display, or a keyboard, is mainly configured to: receive data input by a user, and output data to the user. It should be noted that some types of communication apparatuses may not have an input/output apparatus.

The memory 530 is mainly configured to store a software program and data.

When needing to send data, after performing baseband processing on the to-be-sent data, the processor 520 outputs a baseband signal to the radio frequency circuit; and the radio frequency circuit performs radio frequency processing on the baseband signal and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 520; and the processor 520 converts the baseband signal into data, and processes the data. For ease of description, FIG. 5 shows only one memory, one processor, and one transceiver. In an actual communication apparatus product, there may be one or more processors and one or more memories. The memory may also be referred to as a storage medium, a storage device, or the like. The memory may be disposed independent of the processor, or may be integrated with the processor. This is not limited in embodiments of this application. Optionally, the transceiver 510 and the memory 530 may include one or more boards. Each board may include one or more processors and one or more memories. The processor is configured to read and execute a program in the memory to implement a baseband processing function and control of the communication apparatus. If there are a plurality of boards, the boards may be connected to each other, to enhance a processing capability. In an optional implementation, a plurality of boards may alternatively share one or more processors, or share one or more memories, or simultaneously share one or more processors.

When the communication apparatus 500 serves as a first communication apparatus, the transceiver 510 is mainly configured to implement a transceiving function of the first communication apparatus. The processor 520 is a control center of the first communication apparatus, and is configured to control the first communication apparatus to perform processing operations on a side of the first communication apparatus in the foregoing method embodiment. The memory 530 is mainly configured to store computer program code and data of the first communication apparatus. In this embodiment of this application, a transceiver with a transceiving function may be considered as a transceiver module (a transceiver unit) of the first communication apparatus, and a processor with a processing function may be considered as a processing module (a processing unit) of the first communication apparatus.

In an implementation, the processor 520 is configured to perform processing actions on the side of the first communication apparatus in the embodiment shown in FIG. 3, and the transceiver 510 is configured to perform transceiving actions on the side of the first communication apparatus in FIG. 3. For example, the processor 520 is configured to perform the processing operation of S302 in the embodiment shown in FIG. 3, and may be specifically determining the first information based on the data requirement of the second communication apparatus and the data information of the first communication apparatus. The first information indicates the data information of the first communication apparatus. The transceiver 510 is configured to perform S303 in the embodiment shown in FIG. 3, and may be specifically sending the first information to the second communication apparatus.

It should be understood that FIG. 5 is merely an example rather than a limitation, and the first communication apparatus including the transceiver module and the processing module may not depend on the structure shown in FIG. 5.

When the communication apparatus serves as a second communication apparatus, the transceiver 510 is mainly configured to implement a transceiving function of the second communication apparatus. The processor 520 is a control center of the second communication apparatus, and is configured to control the second communication apparatus to perform processing operations on the side of the second communication apparatus in the foregoing method embodiment. The memory 530 is mainly configured to store computer program code and data of the second communication apparatus.

In an implementation, the transceiver 510 is configured to perform a receiving and sending-related process performed by the second communication apparatus in the embodiment shown in FIG. 3. For example, the transceiver 510 is configured to perform S301 in the embodiment shown in FIG. 3, and may be specifically sending the first information to the second communication apparatus. The processor 520 is configured to perform a processing-related process performed by the second communication apparatus in the embodiment shown in FIG. 3. For example, the processor 520 is configured to perform S304 in the embodiment shown in FIG. 3, and may be specifically determining the transmission information of the first communication apparatus based on the data information of the first communication apparatus.

It should be understood that FIG. 5 is merely an example rather than a limitation, and the second communication apparatus including the processor, the memory, and the transceiver may not depend on the structure shown in FIG. 5.

When the first communication apparatus (or may be the second communication apparatus) is a chip, FIG. 6 is a simplified diagram of a structure of a chip apparatus. The chip includes an interface circuit 601 and a processor 602. The interface circuit 601 and the processor 602 are coupled to each other. It may be understood that the interface circuit 601 may be a transceiver or an input/output interface, and the processor may be a processing module, a microprocessor, or an integrated circuit integrated on the chip. The sending operation performed by the first communication apparatus (or may be the second communication apparatus) in the foregoing method embodiment may be understood as an output of the chip apparatus, and the receiving operation performed by the first communication apparatus (or may be the second communication apparatus) in the foregoing method embodiment may be understood as an input of the chip apparatus.

Optionally, the chip apparatus 600 may further include a memory 603, configured to store instructions to be executed by the processor 602, or store input data required by the processor 602 to run instructions, or store data generated after the processor 602 runs instructions. Optionally, the memory 603 may alternatively be integrated with the processor 602.

An embodiment of this application further provides a computer-readable storage medium. The computer-readable storage medium stores computer instructions used to implement the method performed by the first communication apparatus or the second communication apparatus in the foregoing method embodiment.

For example, when a computer program is executed by a computer, the computer is enabled to implement the method performed by the first communication apparatus or the second communication apparatus in the foregoing method embodiment.

An embodiment of this application further provides a computer program product including instructions. When the instructions are executed by a computer, the computer is enabled to implement the method performed by the first communication apparatus or the second communication apparatus in the foregoing method embodiment.

An embodiment of this application further provides a communication system. The communication system includes the first communication apparatus and the second communication apparatus in the foregoing embodiments.

An embodiment of this application further provides a chip apparatus including a processor. The processor is configured to invoke a computer program or computer instructions stored in a memory, so that the processor performs the communication method in the embodiment shown in FIG. 3. In a possible implementation, an input of the chip apparatus corresponds to the receiving operation in the embodiment shown in FIG. 3, and an output of the chip apparatus corresponds to the sending operation in the embodiment shown in FIG. 3.

Optionally, the processor is coupled to the memory through an interface.

Optionally, the chip apparatus further includes the memory. The memory stores the computer program or the computer instructions.

The processor mentioned in any of the foregoing descriptions may be a general central processing unit, a microprocessor, an application-specific integrated circuit (application-specific integrated circuit, ASIC), or one or more of integrated circuits configured to control program execution of the communication method in the embodiment shown in FIG. 3. The memory mentioned in any of the foregoing descriptions may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, reference may be made to the corresponding method embodiments provided above. Details are not described herein again.

In this application, the first communication apparatus or the second communication apparatus may include a hardware layer, an operating system layer running on the hardware layer, and an application layer running on the operating system layer. The hardware layer may include hardware such as a central processing unit (central processing unit, CPU), a memory management module (memory management unit, MMU), and a memory (also referred to as a main memory). An operating system at the operating system layer may be any one or more types of computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method, comprising:

   receiving, by a first communication apparatus, first indication information from a second communication apparatus, wherein the first indication information indicates a data requirement of the second communication apparatus;

determining, by the first communication apparatus, first information based on the data requirement and data information of the first communication apparatus, wherein the first information indicates the data information of the first communication apparatus;

sending, by the first communication apparatus, the first information to the second communication apparatus; and

receiving, by the first communication apparatus, second indication information from the second communication apparatus, wherein the second indication information indicates transmission information of the first communication apparatus, and the transmission information is used by the first communication apparatus to transmit data corresponding to the data requirement.

2. The method according to claim 1, wherein the first indication information is carried in a system message of the second communication apparatus.

3. The method according to claim 1 or 2, wherein the first information is a preamble sequence.

4. The method according to any one of claims 1 to 3, wherein the determining, by the first communication apparatus, first information based on the data requirement and data information of the first communication apparatus comprises: determining, by the first communication apparatus, the first information based on the data requirement, the data information, and a first correspondence, wherein the first correspondence comprises a one-to-one correspondence among the data requirement, the data information, and the first information.

5. The method according to any one of claims 1 to 4, wherein the transmission information of the first communication apparatus comprises at least one or more of the following: transmit power information, transmission beam information, precoding codebook information, and transmission resource information.

6. The method according to any one of claims 1 to 5, wherein the method further comprises: sending, by the first communication apparatus, the data corresponding to the data requirement to the second communication apparatus based on the transmission information of the first communication apparatus.

7. A communication method, comprising:

sending, by a second communication apparatus, first indication information to a first communication apparatus, wherein the first indication information indicates a data requirement of the second communication apparatus;

receiving, by the second communication apparatus, first information from the first communication apparatus, wherein the first information indicates data information of the first communication apparatus, and the data information is information corresponding to the data requirement;

determining, by the second communication apparatus, transmission information of the first communication apparatus based on the data information of the first communication apparatus, wherein the transmission information is used by the first communication apparatus to transmit data corresponding to the data requirement; and

sending, by the second communication apparatus, second indication information to the first communication apparatus, wherein the second indication information indicates the transmission information.

8. The method according to claim 7, wherein the first indication information is carried in a system message of the second communication apparatus.

9. The method according to claim 7 or 8, wherein the first information is a preamble sequence.

10. The method according to any one of claims 7 to 9, wherein the method further comprises: determining, by the second communication apparatus, the data information of the first communication apparatus based on the first information, the data requirement, and a first correspondence, wherein the first correspondence comprises a one-to-one correspondence among the first information, the data requirement, and the data information of the first communication apparatus.

11. The method according to any one of claims 7 to 10, wherein the determining, by the second communication apparatus, transmission information of the first communication apparatus based on the data information of the first communication apparatus comprises:

determining, by the second communication apparatus, a transmission weight of the first communication apparatus based on the data requirement of the second communication apparatus and the data information of the first communication apparatus, and/or determining, by the second communication apparatus, channel state information of the first communication apparatus; and

determining, by the second communication apparatus, transmit power information of the first communication apparatus and/or reception beam information of the second communication apparatus based on the transmission weight and/or the channel state information.

12. The method according to claim 11, wherein the determining, by the second communication apparatus, channel state information of the first communication apparatus comprises:
obtaining, by the second communication apparatus, the channel state information of the first communication apparatus through measurement based on a reception signal of the first information.

13. The method according to any one of claims 7 to 12, wherein the transmission information of the first communication apparatus comprises at least one or more of the following:
transmit power information, transmission beam information, precoding codebook information, and transmission resource information.

14. The method according to any one of claims 7 to 13, wherein the method further comprises:
receiving, by the second communication apparatus, the data corresponding to the data requirement from the second communication apparatus based on the transmission information of the first communication apparatus.

15. A communication apparatus, comprising a transceiver module and a processing module, wherein

the transceiver module is configured to receive first indication information from a second communication apparatus, wherein the first indication information indicates a data requirement of the second communication apparatus;
the processing module is configured to determine first information based on the data requirement and data information of the first communication apparatus, wherein the first information indicates the data information of the first communication apparatus; and
the transceiver module is further configured to: send the first information to the second communication apparatus, and receive second indication information from the second communication apparatus, wherein the second indication information indicates transmission information of the first communication apparatus, and the transmission information is used by the first communication apparatus to transmit data corresponding to the data requirement.

16. The apparatus according to claim 15, wherein the first indication information is carried in a system message of the second communication apparatus.

17. The apparatus according to claim 15 or 16, wherein the first information is a preamble sequence.

18. The apparatus according to any one of claims 15 to 17, wherein when determining the first information based on the data requirement and the data information of the first communication apparatus, the processing module is specifically configured to: determine the first information based on the data requirement, the data information, and a first correspondence, wherein the first correspondence comprises a one-to-one correspondence among the data requirement, the data information, and the first information.

19. The apparatus according to any one of claims 15 to 18, wherein the transmission information of the first communication apparatus comprises at least one or more of the following:
transmit power information, transmission beam information, precoding codebook information, and transmission resource information.

20. The apparatus according to any one of claims 15 to 19, wherein the transceiver module is further configured to send the data corresponding to the data requirement to the second communication apparatus based on the transmission information of the first communication apparatus.

21. A communication apparatus, comprising a transceiver module and a processing module, wherein

the transceiver module is configured to: send first indication information to a first communication apparatus, wherein the first indication information indicates a data requirement of the second communication apparatus; and receive first information from the first communication apparatus, wherein the first information indicates data information of the first communication apparatus, and the data information is information corresponding to the data requirement;

the processing module is configured to determine transmission information of the first communication apparatus based on the data information of the first communication apparatus, wherein the transmission information is used by the first communication apparatus to transmit data corresponding to the data requirement; and

the transceiver module is further configured to send second indication information to the first communication apparatus, wherein the second indication information indicates the transmission information.

22. The apparatus according to claim 21, wherein the first indication information is carried in a system message of the second communication apparatus.

23. The apparatus according to claim 21 or 22, wherein the first information is a preamble sequence.

24. The apparatus according to any one of claims 21 to 23, wherein the processing module is further configured to determine the data information of the first communication apparatus based on the first information, the data requirement, and a first correspondence, wherein the first correspondence comprises a one-to-one correspondence among the first information, the data requirement, and the data information of the first communication apparatus.

25. The apparatus according to any one of claims 21 to 24, wherein when determining the transmission information of the first communication apparatus based on the data information of the first communication apparatus, the processing module is specifically configured to:

determine a transmission weight of the first communication apparatus based on the data requirement of the second communication apparatus and the data information of the first communication apparatus, and/or determine channel state information of the first communication apparatus; and

determine transmit power information of the first communication apparatus and/or reception beam information of the second communication apparatus based on the transmission weight and/or the channel state information.

26. The apparatus according to claim 25, wherein when determining the channel state information of the first communication apparatus, the processing module is specifically configured to obtain the channel state information of the first communication apparatus through measurement based on a reception signal of the first information.

27. The apparatus according to any one of claims 21 to 26, wherein the transmission information of the first communication apparatus comprises at least one or more of the following:
transmit power information, transmission beam information, precoding codebook information, and transmission resource information.

28. The apparatus according to any one of claims 21 to 27, wherein the transceiver module is further configured to receive the data corresponding to the data requirement from the second communication apparatus based on the transmission information of the first communication apparatus.

29. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 6 or the method according to any one of claims 7 to 14 through a logic circuit or by executing code instructions.

30. A computer program product, comprising a computer program, wherein when the computer program is executed by a communication apparatus, the method according to any one of claims 1 to 14 is implemented.

31. A computer-readable storage medium, wherein the storage medium stores a computer-readable program or instructions, and when the computer program or the instructions are executed by a communication apparatus, the method according to any one of claims 1 to 14 is implemented.

32. A communication system, comprising a first communication apparatus configured to perform the method according to any one of claims 1 to 6 and a second communication apparatus configured to perform the method according to any one of claims 7 to 14.

33. A chip, wherein the chip is coupled to a memory, and the chip reads a computer program stored in the memory, to perform the method according to any one of claims 1 to 14.

Terminal device 1

Container 1

Terminal device 2

Container 2

Central node

⋮

Base station

Terminal device **K**

Container **K**

FIG. 1

Base station (BS)

Terminal device (UE)

S201: Broadcast a system message, including an MIB and an SIB

S202: Random access preamble

S203: Random access response

S204: RRC connection request

S205: RRC connection response

FIG. 2

First communication apparatus

Second communication apparatus

S301: First indication information

S302: Determine first information based on a data requirement of the second communication apparatus and data information of the first communication apparatus, where the first information indicates the data information of the first communication apparatus

S303: First information

S304: Determine transmission information of the first communication apparatus based on the data information of the first communication apparatus

S305: Second indication information, where the second indication information indicates the transmission information of the first communication apparatus

S306: The first communication apparatus sends data corresponding to the data requirement to the second communication apparatus based on the transmission information of the first communication apparatus

FIG. 3

Communication apparatus 400

402

401

403

Transceiver module

Processing module

Storage module

FIG. 4

Communication apparatus 500

510

520

Processor

Transceiver

Transmitter
machine
511

513

530

Memory

Receiver
machine
512

FIG. 5

Chip apparatus 600

Processor 602

Interface circuit 601

Memory 603

FIG. 6

## INTERNATIONAL SEARCH REPORT

| | International application No. |
|---|---|
| | **PCT/CN2022/105593** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04W H04Q H04L

Documentation searched other than minimum documentation to the extent that such documents are included in the fields searched

Electronic data base consulted during the international search (name of data base and, where practicable, search terms used)

CNKI, CNPAT, WPI, EPODOC: 第一, 第二, 设备, 装置, 通信, 收集, 采集, 上传, 上报, 传输, 数据, 需求, 信道状态, 测量, 发射功率, 波束, first, second, device, apparatus, communication, collection, acquisition, upload, report, transmission, data, demand, channel state, measurement, transmit power, beam

**C. DOCUMENTS CONSIDERED TO BE RELEVANT**

| Category* | Citation of document, with indication, where appropriate, of the relevant passages | Relevant to claim No. |
|---|---|---|
| Y | CN 114143802 A (HUAWEI TECHNOLOGIES CO., LTD.) 04 March 2022 (2022-03-04) description, paragraphs [0234]-[0355] | 1-33 |
| Y | WO 2022012212 A1 (HUAWEI TECHNOLOGIES CO., LTD.) 20 January 2022 (2022-01-20) description, p. 19, line 1 to p. 20, line 15 | 1-33 |
| A | CN 112055340 A (SHENZHEN POLYTECHNIC UNIVERSITY) 08 December 2020 (2020-12-08) entire document | 1-33 |
| A | CN 112055339 A (SHENZHEN POLYTECHNIC UNIVERSITY) 08 December 2020 (2020-12-08) entire document | 1-33 |
| A | WO 2022061940 A1 (HUAWEI TECHNOLOGIES CO., LTD.) 31 March 2022 (2022-03-31) entire document | 1-33 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2022** | **26 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105593**

| Patent document cited in search report | | | Publication date (day/month/year) | Patent family member(s) | | | Publication date (day/month/year) |
|---|---|---|---|---|---|---|---|
| CN | 114143802 | A | 04 March 2022 | WO | 2022048546 | A1 | 10 March 2022 |
| WO | 2022012212 | A1 | 20 January 2022 | CN | 113950019 | A | 18 January 2022 |
| CN | 112055340 | A | 08 December 2020 | None | | | |
| CN | 112055339 | A | 08 December 2020 | None | | | |
| WO | 2022061940 | A1 | 31 March 2022 | None | | | |

Form PCT/ISA/210 (patent family annex) (January 2015)